# EUROPEAN PATENT APPLICATION

(11) **EP 4 580 119 A1**
(43) Date of publication of application: **02.07.2025**
(21) Application number: 23870285.6
(22) Date of filing: 11.09.2023
(51) Int. Cl.: H04L 9/32, H04W 12/00, H04L 9/40, H04W 12/63, H04W 12/069, H04W 12/37

(54) **COMMUNICATION METHOD AND APPARATUS**

(30) Priority: 26.09.2022 CN 202211174577
(71) Applicant: Huawei Technologies Co., Ltd., Shenzhen, Guangdong 518129 (CN)
(72) Inventor: XU, Yishan, Shenzhen, Guangdong 518129 (CN); GUO, Longhua, Shenzhen, Guangdong 518129 (CN); HUANG, Kang, Shenzhen, Guangdong 518129 (CN)
(74) Representative: MERH-IP Matias Erny Reichl Hoffmann Patentanwälte PartG mbB
(86) International application number: PCT/CN2023/118059
(87) International publication number: WO 2024/067046

(57) **Abstract**

This application relates to the field of communication technologies, and provides a communication method and apparatus, to improve communication security. A core network device receives first information from a requester, where the first information indicates a first terminal. The core network device obtains an authentication mode corresponding to the first terminal, and performs a procedure corresponding to the authentication mode. The core network device obtains the authentication mode corresponding to the first terminal, and performs the corresponding procedure, so that security can be improved.

## Description

### CROSS-REFERENCE TO RELATED APPLICATIONS

This application claims priority to Chinese Patent Application No. 202211174577.5, filed with the China National Intellectual Property Administration on September 26, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

A passive internet of things terminal (for example, a tag) is simple in functions, and may be widely used in industries, enterprises, agriculture, animal husbandry, forestry, and the like. A combination of an internet of things technology and a wireless communication system technology implements a prospect of application and deployment of the internet of things on a larger scale. How to improve communication security in the internet of things is a technical problem that needs to be resolved.

### SUMMARY

Embodiments of this application provide a communication method and apparatus, to improve communication security.

According to a first aspect, a communication method is provided. An execution body of the method may be a core network device, or may be a component used in a core network device, for example, a chip or a processor. The following uses an example in which the execution body is the core network device for description. First, first information from a requester is received, where the first information indicates a first terminal. Then, an authentication mode corresponding to the first terminal is obtained. Next, a procedure corresponding to the authentication mode is performed.

The core network device obtains the authentication mode corresponding to the first terminal, and performs the corresponding procedure, so that security can be improved.

**In** a possible implementation, after receiving the first information from the requester, the core network device may further obtain an identifier of the first terminal, and send the identifier of the first terminal to the requester.

**In** a possible implementation, the authentication mode includes any one of the following: a two-way authentication mode and a one-way authentication mode.

**In** a possible implementation, the two-way authentication mode includes any one of the following: two-way authentication between the first terminal and the requester, and two-way authentication between the first terminal and a first network corresponding to the core network device.

**In** a possible implementation, the one-way authentication mode includes any one of the following: one-way authentication performed by the requester on the first terminal, one-way authentication performed by a first network corresponding to the core network device on the first terminal, one-way authentication performed by the first terminal on the requester, and one-way authentication performed by the first terminal on the first network corresponding to the core network device.

**In** a possible implementation, performing the procedure corresponding to the authentication mode includes: when the authentication mode is one-way authentication performed by the first terminal on the requester, receiving a random number from the first terminal, and sending the random number to the requester; and receiving a check value or ciphertext information from the requester, and sending the check value or the ciphertext information to the first terminal.

In a possible implementation, performing the procedure corresponding to the authentication mode includes: when the authentication mode is one-way authentication performed by the requester on the first terminal, receiving a random number from the requester, and sending the random number to the first terminal; and receiving a check value or ciphertext information from the first terminal, and sending the check value or the ciphertext information to the requester.

In a possible implementation, performing the procedure corresponding to the authentication mode includes: when the authentication mode is one-way authentication performed by the requester on the first terminal, obtaining a random number, and sending the random number to the first terminal; and receiving a check value or ciphertext information from the first terminal, sending the random number to the requester, and sending the check value or the ciphertext information to the requester.

In a possible implementation, performing the procedure corresponding to the authentication mode includes: when the authentication mode is two-way authentication between the first terminal and the requester, receiving a random number from the first terminal, and sending the random number to the requester; receiving a first check value or first ciphertext information from the requester, and sending the first check value or the first ciphertext information to the first terminal; and receiving a second check value or second ciphertext information from the first terminal, and sending the second check value or the second ciphertext information to the requester.

In a possible implementation, performing the procedure corresponding to the authentication mode includes: when the authentication mode is one-way authentication performed by the first terminal on the first network corresponding to the core network device, receiving a first random number from the first terminal; obtaining a second random number; and obtaining a check value or ciphertext information based on the first random and the second random number, and sending the check value or the ciphertext information to the first terminal.

In a possible implementation, performing the procedure corresponding to the authentication mode includes: when the authentication mode is one-way authentication performed by the first terminal on the first network corresponding to the core network device, receiving a first random number from the first terminal; and obtaining a check value or ciphertext information based on the first random, and sending the check value or the ciphertext information to the first terminal.

In a possible implementation, performing the procedure corresponding to the authentication mode includes: when the authentication mode is one-way authentication performed by the first network corresponding to the core network device on the first terminal, obtaining a random number, and sending the random number to the first terminal; and receiving a check value or ciphertext information from the first terminal, and checking the check value or the ciphertext information based on the random number.

In a possible implementation, performing the procedure corresponding to the authentication mode includes: when the authentication mode is one-way authentication performed by the first network corresponding to the core network device on the first terminal, obtaining a random number, and sending the random number to the first terminal; and receiving a check value or ciphertext information from the first terminal, sending the random number to another core network device, and sending the check value or the ciphertext information to the another core network device, so that the another core network device checks the check value or the ciphertext information based on the random number.

In a possible implementation, performing the procedure corresponding to the authentication mode includes: when the authentication mode is two-way authentication between the first terminal and the first network corresponding to the core network device, receiving a first random number from the first terminal; obtaining a second random number; obtaining a first check value or first ciphertext information based on the first random number and the second random number, and sending the first check value or the first ciphertext information to the first terminal; and receiving a second check value or second ciphertext information from the first terminal, and checking the second check value or the second ciphertext information based on the second random number.

In a possible implementation, performing the procedure corresponding to the authentication mode includes: when the authentication mode is two-way authentication between the first terminal and the first network corresponding to the core network device, receiving a first random number from the first terminal; obtaining a first check value or first ciphertext information based on the first random number, sending the first check value or the first ciphertext information to the first terminal, and sending a second random number to the first terminal; and receiving a second check value or second ciphertext information from the first terminal, and checking the second check value or the second ciphertext information based on the second random number.

In a possible implementation, the first information further indicates the authentication mode corresponding to the first terminal. That the core network device obtains the authentication mode corresponding to the first terminal includes: obtaining, based on the first information, the authentication mode corresponding to the first terminal. When indicating the authentication mode, the requester may indicate the authentication mode corresponding to the first terminal to the core network device as required or dynamically. For a same terminal, an AF may indicate a same or different authentication modes at different time. The first information indicates the authentication mode, so that signaling exchange can be reduced.

In a possible implementation, that the core network device obtains the authentication mode corresponding to the first terminal includes: The core network device obtains first context information, first policy information, a first service configuration, or first subscription data of the first terminal, where the first context information, the first policy information, the first service configuration, or the first subscription data includes the authentication mode for the first terminal. The core network device obtains, based on the first context information, the first policy information, the first service configuration, or the first subscription data, the authentication mode corresponding to the first terminal.

In a possible implementation, that the core network device obtains the authentication mode corresponding to the first terminal includes: The core network device obtains second context information, second policy information, a second service configuration, or second subscription data of the requester, where the second context information, the second policy information, the second service configuration, or the second subscription data includes an authentication mode corresponding to each of one or more terminals managed by the requester, and the one or more terminals managed by the requester include the first terminal. The core network device obtains, based on the second context information, the second policy information, the second service configuration, or the second subscription data, the authentication mode corresponding to the first terminal.

In a possible implementation, after obtaining the authentication mode corresponding to the first terminal, the core network device may further send information about the authentication mode to the first terminal. This manner may be applicable to a scenario in which no authentication mode is configured in the first terminal. After learning the authentication mode for the first terminal, the first terminal may perform the procedure corresponding to the authentication mode.

According to a second aspect, a communication method is provided. An execution body of the method may be a core network device, or may be a component used in a core network device, for example, a chip or a processor. The following uses an example in which the execution body is the core network device for description. First, first information from a requester is received, where the first information indicates a first terminal. Then, an authentication mode corresponding to the first terminal is obtained, where the authentication mode corresponding to the first terminal is no authentication performed. Next, it is determined that a location of the first terminal falls within a preset location range. The requester or a first network corresponding to the core network device is allowed to skip an authentication procedure for the first terminal.

When the authentication mode corresponding to the first terminal that is obtained by the core network device is no authentication performed, a final authentication mode is further determined based on the location of the terminal, so that security can be improved.

For an implementation of obtaining, by the core network device, the authentication mode corresponding to the first terminal, refer to a plurality of possible implementations of the first aspect. Details are not described again.

In a possible implementation, after the core network device receives the first information from the requester, the core network device further obtains an identifier of the first terminal, and sends the identifier of the first terminal to the requester.

In a possible implementation, the core network device determines that the location of the first terminal is outside the preset location range, and performs a procedure corresponding to a configured authentication mode, where the configured authentication mode is used to authenticate a terminal that accesses a network in which the core network device is located. When the authentication mode corresponding to the first terminal that is obtained by the core network device is no authentication performed, the final authentication mode is further determined based on the location of the terminal, so that the security can be improved.

In a possible implementation, the location of the first terminal includes one or more of the following: a geographical location of the first terminal, and a geographical location of a second terminal that performs random access on the first terminal. The preset location range is a preset geographical location range.

In a possible implementation, the location of the first terminal is represented by a first identifier, and the preset location range is a preset identifier range. The first identifier includes one or more of the following: an identifier of an access network device accessed by the first terminal, an identifier of a cell in which the first terminal is located, an identifier of a tracking area in which the first terminal is located, an identifier of a network accessed by the first terminal, an identifier of a slice accessed by the first terminal, an identifier of a closed access group accessed by the first terminal, an identifier of an access network device accessed by a second terminal, an identifier of a cell in which the second terminal is located, an identifier of a tracking area in which the second terminal is located, an identifier of a network accessed by the second terminal, an identifier of a slice accessed by the second terminal, and an identifier of a closed access group accessed by the second terminal. The second terminal is a terminal that performs random access on the first terminal.

In a possible implementation, before sending the identifier of the first terminal to the requester, the core network device further sends, to the first terminal, indication information indicating access success of the first terminal. Therefore, the first terminal can quickly access a core network, reducing signaling exchange and latency overheads, improving inventory taking efficiency of the first terminal, and reducing power consumption overheads of the first terminal.

According to a third aspect, a communication apparatus is provided. The apparatus has a function of implementing any one of the foregoing aspects and the possible implementations of the foregoing aspects. The function may be implemented by hardware, or may be implemented by hardware executing corresponding software. The hardware or the software includes one or more functional modules corresponding to the foregoing function.

According to a fourth aspect, a communication apparatus is provided, includes a processor, and optionally, further includes a memory. The processor is coupled to the memory. The memory is configured to store computer programs or instructions. The processor is configured to: execute some or all of the computer programs or instructions in the memory, and when the some or all of the computer programs or instructions are executed, implement a function in the method according to any one of the foregoing aspects and the possible implementations of the foregoing aspects.

In a possible implementation, the apparatus may further include a transceiver. The transceiver is configured to: send a signal processed by the processor, or receive a signal input into the processor. The transceiver may perform a sending action or a receiving action in any one of the aspects and the possible implementations of the aspects.

According to a fifth aspect, this application provides a chip system. The chip system includes one or more processors (which may also be referred to as processing circuits). The processor is electrically coupled to a memory (which may also be referred to as a storage medium). The memory may be located in the chip system, or may not be located in the chip system. The memory is configured to store computer programs or instructions. The processor is configured to: execute some or all of the computer programs or instructions in the memory, and when the some or all of the computer programs or instructions are executed, implement a function in the method according to any one of the foregoing aspects and the possible implementations of the foregoing aspects.

In a possible implementation, the chip system may further include an input/output interface (which may also be referred to as a communication interface). The input/output interface is configured to: output a signal processed by the processor, or receive a signal input into the processor. The input/output interface may perform a sending action or a receiving action in any one of the aspects and the possible implementations of the aspects. Specifically, an output interface performs the sending action, and an input interface performs the receiving action.

In a possible implementation, the chip system may include a chip, or may include a chip and another discrete device.

According to a sixth aspect, a computer-readable storage medium is provided, and is configured to store a computer program. The computer program includes instructions for implementing a function in any one of the aspects and the possible implementations of the aspects.

Alternatively, a computer-readable storage medium is provided, and is configured to store a computer program. When the computer program is executed by a computer, the computer may be enabled to perform the method according to any one of the foregoing aspects and the possible implementations of the foregoing aspects.

According to a seventh aspect, a computer program product is provided. The computer program product includes computer program code. When the computer program code is run on a computer, the computer is enabled to perform the method according to any one of the foregoing aspects and the possible implementations of the foregoing aspects.

According to an eighth aspect, a communication system is provided. The communication system includes a core network device that performs any one of the first aspect and the possible implementations of the first aspect, and a first terminal that interacts with the core network device. Alternatively, the communication system includes a core network device that performs any one of the second aspect and the possible implementations of the second aspect, and a first terminal that interacts with the core network device.

For example, the first terminal is configured to send an identifier of the first terminal to the core network device.

For example, the first terminal is configured to perform two-way authentication between the first terminal and a requester, two-way authentication between the first terminal and a first network corresponding to the core network device, one-way authentication performed by the requester on the first terminal, one-way authentication performed by the first network corresponding to the core network device on the first terminal, one-way authentication performed by the first terminal on the requester, or one-way authentication performed by the first terminal on the first network corresponding to the core network device.

For example, the first terminal is configured to send one or more of a random number, a first random number, a second random number, a check value, ciphertext information, a first check value, first ciphertext information, a second check value, and second ciphertext information to the core network device.

For example, the first terminal is configured to receive one or more of the random number, the first random number, the second random number, the check value, the ciphertext information, the first check value, the first ciphertext information, the second check value, and the second ciphertext information from the core network device.

For example, the first terminal is configured to receive information about an authentication mode from the core network device.

In a possible example, the communication system further includes the requester that interacts with the core network device.

For example, the requester is configured to send first information to the core network device, where the first information indicates the first terminal.

For example, the requester is configured to receive the identifier of the first terminal from the core network device.

For example, the requester is configured to perform two-way authentication between the first terminal and the requester, one-way authentication performed by the requester on the first terminal, or one-way authentication performed by the first terminal on the requester.

For example, the requester is configured to send one or more of the random number, the first random number, the second random number, the check value, the ciphertext information, the first check value, the first ciphertext information, the second check value, and the second ciphertext information to the core network device.

For example, the requester is configured to receive one or more of the random number, the first random number, the second random number, the check value, the ciphertext information, the first check value, the first ciphertext information, the second check value, and the second ciphertext information from the core network device.

For technical effects in the third aspect to the eighth aspect, refer to the descriptions in the first aspect and the second aspect. Repeated parts are not described again.

### BRIEF DESCRIPTION OF DRAWINGS

FIG. 1 is a diagram of a structure of a communication system according to an embodiment of this application;
FIG. 2 is a diagram of a communication procedure according to an embodiment of this application;
FIG. 3a is a schematic flowchart of one-way authentication performed by a first terminal on a requester according to an embodiment of this application;
FIG. 3b is a schematic flowchart of one-way authentication performed by a requester on a first terminal according to an embodiment of this application;
FIG. 3c is a schematic flowchart of two-way authentication between a first terminal and a requester according to an embodiment of this application;
FIG. 3d is a schematic flowchart of one-way authentication performed by a first terminal on a first network corresponding to a core network device according to an embodiment of this application;
FIG. 3e is schematic flowchart of one-way authentication performed by a first network corresponding to a core network device on a first terminal according to an embodiment of this application;
FIG. 3f is a schematic flowchart of two-way authentication between a first terminal and a first network corresponding to a core network device according to an embodiment of this application;
FIG. 4 is a schematic flowchart of authentication between a first terminal and a requester according to an embodiment of this application;
FIG. 5 is a schematic flowchart of authentication between a first terminal and a first network according to an embodiment of this application;
FIG. 6 is a schematic flowchart of one-way authentication performed by a requester or a first network on the first network according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

For ease of understanding by a person skilled in the art, the following describes some terms in embodiments of this application.
(1) Stock taking operation: The stock taking operation may also be referred to as an inventory taking operation. The operation may obtain identification information of a terminal (for example, different types of terminal forms such as an electronic tag and a tag, where the following uses an example in which the terminal is a tag for description, but the terminal is not limited to a tag). For example, the identification information of the terminal may be obtained by using a command such as a query (query) or an acknowledgment (ack). The identification information of the terminal is, for example, an electronic product code (electronic product code, EPC) or a tag identifier (tag identifier, TID).
(2) Read (Read) operation: The read operation may read data in a storage area of a terminal. For example, the data in the storage area may include identification information (for example, an electronic product code (electronic product code, EPC) or a tag identifier (tag identifier, TID)), content stored in a reserved area, or content stored in a user storage area.
(3) Write (Write) operation: The write operation may be used to write a storage area of a terminal. For example, identification information (for example, an EPC or a TID) in the storage area may be written or rewritten. Alternatively, a write or rewrite operation may be performed on data in a reserved area or a user storage area.
(4) Kill (Kill) operation: The kill operation may invalidate a terminal. For example, the terminal cannot work after invalidated.
(5) Lock (Lock) operation: The lock operation may lock information of a terminal, and may prevent a read operation or a write operation on this tag. Alternatively, the lock operation may lock a memory bank (memory bank), and may prevent or allow a read operation or a write operation on the memory bank.
(6) Block write operation: may enable a reader/writer to perform a multi-byte write operation on a storage area (for example, a reserved area, an EPC storage area, a TID storage area, or a user storage area) of a terminal by using a single command.
(7) Block erase operation: may enable a reader/writer to perform a multi-byte erase operation on a storage area (for example, a reserved area, an EPC storage area, a TID storage area, or a user storage area) of a terminal.
(8) Access operation: enables a terminal with a non-zero-value access password (access password) to change from an open (open) state to a secured (secured) state.

In embodiments of this application, "at least one" means one or more, and "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, unless otherwise stated, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, a first message and a second message are merely intended to distinguish between different messages, but do not indicate that the two messages are different in content, priorities, or importance degrees.

A communication method provided in this application may be applied to various communication systems. For example, the communication system may be internet of things (internet of things, IoT), passive internet of things (passive IoT, P-IoT; or ambient IoT, A-IoT), semi-passive internet of things (semi-passive IoT), semi-active internet of things (semi-active IoT), active internet of things (active IoT), narrowband internet of things (narrowband internet of things, NB-IoT), or long term evolution (long term evolution, LTE), may be a 5th generation (5th generation, 5G) communication system, may be a hybrid architecture of LTE and 5G, or may be a new communication system emerging in 6G or future communication development, or the like. Alternatively, the communication system may be a machine to machine (machine to machine, M2M) network, a machine type communication (machine type communication, MTC) network, or another network.

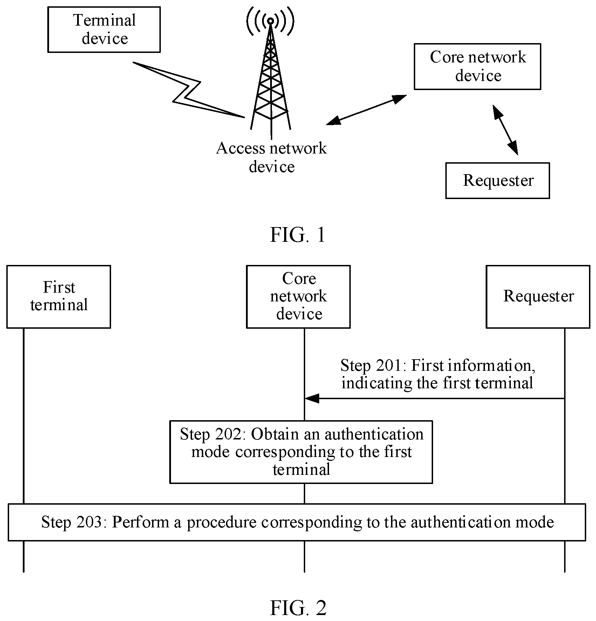

FIG. 1 is a diagram of a possible communication system applicable to an embodiment of this application. The communication system includes a terminal device, an access network device, a core network device, and a requester.

The requester may perform an operation on the terminal device (for example, a tag), where the operation includes but is not limited to obtaining of information about the terminal device, a stock taking operation (or referred to as an inventory taking operation), a read operation, a write operation, an invalidation operation, a kill operation, and the like. The requester sends an operation instruction via the core network device. In a possible implementation, the core network device indicates the access network device to initiate random access to the terminal device. After the terminal device successfully performs random access, the access network device sends or forwards, to the terminal device, information about an operation that needs to be performed. In another possible implementation, the core network device indicates a second terminal device to initiate random access to a first terminal device, and after the first terminal device successfully performs random access, the second terminal device sends or forwards, to the first terminal device, information about an operation that needs to be performed.

The terminal device obtains corresponding information or sends corresponding information based on the received information about the operation. For example, when the operation is the stock taking operation, the terminal device sends identification information of the terminal device; when the operation is the read operation, the terminal device sends data information stored in a storage area of the terminal device; or when the operation is the write operation, the terminal device stores, in a storage area of the terminal device, data information that needs to be written.

The access network device sends the information from the terminal device to the core network device. The core network device sends the information to the requester.

The terminal device may be a terminal device in an internet of things technology, and includes but is not limited to a passive terminal device, a semi-passive terminal device, a semi-active terminal device, an active terminal device, a low-power-consumption terminal device, a zero-power-consumption terminal device, a passive (passive) terminal device, an active (active) terminal device, and the like.

The terminal device may be referred to as user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal device may be widely used in various scenarios, for example, internet of things (internet of things, IoT), device-to-device (device-to-device, D2D), vehicle-to-everything (vehicle-to-everything, V2X) communication, machine type communication (machine type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a wearable device, a terminal device in a 5G network, a terminal device in a future evolved public land mobile network (public land mobile network, PLMN) or a non-terrestrial network (non-terrestrial network, NTN), or the like. Alternatively, the terminal device may be an end device, a logical entity, or a smart device, for example, a terminal device such as a mobile phone or a smart terminal, a communication device such as a server, a gateway, a base station, or a controller, or an internet of things (internet of things, IoT) device such as a tag (for example, a passive tag, an active tag, a semi-active tag, or a semi-passive tag), a sensor, an electricity meter, or a water meter. Alternatively, the terminal device may be an uncrewed aerial vehicle (unmanned aerial vehicle or uncrewed aerial vehicle, UAV) having a communication function. When the terminal device is a passive terminal, a semi-passive terminal, a semi-active terminal, an active terminal, or a tag, the terminal device may receive or send data by obtaining energy. A manner of obtaining the energy includes but is not limited to radio, solar energy, light energy, wind energy, water energy, thermal energy, kinetic energy, and the like. The manner in which a passive terminal, a semi-passive terminal, a semi-active terminal, an active terminal, or a tag obtains energy is not limited in this application. In addition, the tag in this application may be in a tag form, or may be in any terminal form.

The access network device is configured to connect the terminal device to a wireless network. The access network device may be a base station (base station), a pole site, an indoor base station (for example, LampSite), a home base station (for example, a home NB), a micro base station, an integrated access and backhaul (integrated access and backhaul, IAB) node, a mobile base station, a radio access network, a radio access network device, an evolved NodeB (evolved NodeB, eNodeB) in an LTE system or an evolved LTE system (LTE-Advanced, LTE-A), a next generation NodeB (next generation NodeB, gNB) in a 5G communication system, a transmission reception point (transmission reception point, TRP), a baseband unit (baseband unit, BBU), a Wi-Fi access point (access point, AP), a base station in a future mobile communication system, an access node in a Wi-Fi system, or the like. Alternatively, the access network device may be a module or a unit that implements some functions of a base station, for example, may be a central unit (central unit, CU) or a distributed unit (distributed unit, DU). A specific technology and a specific device form that are used by the access network device are not limited in embodiments of this application. For example, in a network structure, the access network device may be a CU node, a DU node, or an access network device including a CU node and a DU node. Specifically, the CU node is configured to support protocols such as radio resource control (radio resource control, RRC), a packet data convergence protocol (packet data convergence protocol, PDCP), and a service data adaptation protocol (service data adaptation protocol, SDAP). The DU node is configured to support a radio link control (radio link control, RLC) layer protocol, a media access control (media access control, MAC) layer protocol, and a physical layer protocol. Alternatively, the access network device may be a device having a reader (reader) function.

The requester may be understood as a device that sends an operation instruction, for example, a third-party device, a server (server), a P-IoT server, an application server (application server, AS), an application function (application function, AF), a passive internet of things application function (P-IoT AF), an internet of things application function (IoT AF), or another device that sends an operation instruction. The requester may correspond to a specific type of user. The specific type of user may include an enterprise, a tenant, a third party, or a company, which is not limited. That the requester corresponds to a specific type of user may be understood as that the requester belongs to the specific type of user and is managed by the specific type of user.

The core network device may include one or more of the following network elements.

An access management network element (which may also be referred to as an access management network element, a mobility management network element, or an access and mobility management network element) is a control plane network element provided by an operator network, and is responsible for access control and mobility management for access of the terminal device to the operator network, for example, including functions such as mobility state management, assignment of a temporary subscriber identifier, and user authentication. **In** the 5G communication system, the access management network element may be an access and mobility management function (access and mobility management function, AMF) network element. **In** the future communication system, the access management network element may still be an AMF network element, or may have another name. This is not limited in this application.

A session management network element is mainly responsible for session management in a mobile network, for example, session establishment, modification, and release. Specific functions are, for example, assigning an IP address to the user, and selecting a user plane network element that provides a packet forwarding function. In the 5G communication system, the session management network element may be a session management function (session management function, SMF) network element. In the future communication system, the session management network element may still be an SMF network element, or may have another name. This is not limited in this application.

A user plane network element is responsible for forwarding and reception of user data in the terminal device. The user plane network element may receive user data from a data network, and transmit the user data to the terminal device via the access network device. In addition, the user plane network element may further receive user data from the terminal device via the access network device, and forward the user data to the data network. A transmission resource and a scheduling function in the user plane network element that provide a service for the terminal device are managed and controlled by the SMF network element. In the 5G communication system, the user plane network element may be a user plane function (user plane function, UPF) network element. In the future communication system, the user plane network element may still be a UPF network element, or may have another name. This is not limited in this application.

A data management network element is configured to: generate an authentication credential, process a subscriber identifier (for example, store and manage a subscriber permanent identifier), control access, manage subscription data, and the like. In the 5G communication system, the data management network element may be a unified data management (unified data management, UDM) network element. In the future communication system, the unified data management may still be a UDM network element, or may have another name. This is not limited in this application.

A policy control network element mainly supports providing a unified policy framework to control network behavior and providing a policy rule for a control layer network function, and is responsible for obtaining user subscription information related to a policy decision. In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be a PCF network element, or may have another name. This is not limited in this application.

A network repository network element may be configured to: provide a network element discovery function, and provide, based on a request from another network element, network element information corresponding to a network element type. The NRF further provides a network element management service, for example, network element registration, update, or deregistration, and network element status subscription and push. In the 5G communication system, the network repository network element may be a network registration function (network repository function, NRF) network element. In the future communication system, the network repository network element may still be an NRF network element, or may have another name. This is not limited in this application.

A network exposure network element is a control plane network element provided by an operator. The network exposure network element opens an external interface of an operator network to a third party in a secure manner, and may be configured to securely open, to the outside, a service, a capability, and the like that are provided by a 3rd generation partnership project (3rd generation partnership project, 3GPP) network function device. For example, when the session management network element needs to communicate with a third-party network element, the network exposure network element may serve as a relay for communication between the session management network element and the third-party network element. When serving as the relay, the network exposure network element may translate identification information of a subscriber and identification information of the third-party network element. For example, when sending an SUPI of the subscriber from the operator network to the third party, the network exposure network element may translate the SUPI into an external identity (identity, ID) corresponding to the SUPI. On the contrary, when sending the external ID (an ID of the third-party network element) to the operator network, the network exposure network element may translate the external ID into the SUPI. In the 5G communication system, the network exposure function network element may be a network exposure function (network exposure function, NEF) network element. In the future communication system, the network exposure function network element may still be an NEF network element, or may have another name. This is not limited in this application.

A network slice selection network element may be configured to select an appropriate network slice for a service of a terminal. In the 5G communication system, the network slice selection network element may be a network slice selection function (network slice selection function, NSSF) network element. In the future communication system, the network exposure function network element may still be an NSSF network element, or may have another name. This is not limited in this application.

A network data analytics network element may collect data from each network function (network function, NF) (via a network capability exposure function network element), for example, the policy control network element, the session management network element, the user plane network element, the access management network element, and an application function network element, and perform analysis and prediction. In the 5G communication system, the network data analytics network element may be a network data analytics function (network data analytics function, NWDAF). In the future communication system, the network exposure function network element may still be an NWDAF network element, or may have another name. This is not limited in this application.

A unified data repository network element is responsible for storing structured data information, including subscription information, policy information, and network data or service data defined in a standard format. In the 5G communication system, the unified data repository network element may be unified data repository (unified data repository, UDR). In the future communication system, the network exposure function network element may still be an UDR network element, or may have another name. This is not limited in this application.

An authentication server function (authentication server function, AUSF), a functional entity for authentication of UE by a network, is configured for the network to verify whether the UE is authentic, and may support authentication in an access service defined in a 3GPP framework and authentication of a non-3GPP access network.

A network slice-specific and standalone non-public network-specific authentication and authorization function (network slice-specific and SNPN authentication and authorization function, NSSAAF) has main functions of connection to an external AAA server and conversion between a service-based interface (service-based interface, SBI) interface and an AAA interface, and is an intermediate network element that connects a network element in a 3GPP network to the external AAA server. For example, the NSAAF is preconfigured with a correspondence between address information of the AAA server and domain information. After the NSSAAF receives the domain information, the NSAAF may determine the AAA server based on the address information of the AAA server, and then send a received message to the AAA server. For another example, the NSSAAF may request address information of the AAA server from a domain name server (domain name server, DNS) server based on domain information, obtain the address information of the AAA server from the DNS server, and then send a received message to the AAA server. The NSSAAF may be further configured to support access to a standalone non-public network with credentials (credentials) from a credential holder (credential holder, CH) using the AAA server, or to support access to a standalone non-public network with credentials (credentials) from a default credential server (default credential server, DCS) using the AAA server. If the credential holder or the default credential server is from the third party, the NSSAAF may communicate with the AAA server via an AAA proxy (AAA proxy).

A tag management function (tag management function, TMF) may also be referred to as an internet of things management function (IoT management function, IMF) or an internet of things device management function (IoT device management function, IDMF), and may implement one or more of the following functions: (1) identifying an instruction sent by the requester, and performing an operation on an internet of things terminal according to the instruction sent by the request; (2) indicating the access network device or the terminal device to perform a random access procedure of the internet of things terminal; (3) obtaining data of the internet of things terminal, where the data sent by the internet of things terminal may be filtered or collected; (4) sending the data from the internet of things terminal to the requester; (5) connecting to one or more requesters, and performing data routing; and (6) performing a security authentication procedure for the internet of things terminal, where the security procedure may be performed based on context information, policy information, or subscription data corresponding to the requester or the internet of things terminal. The TMF may be an independent network element or device that is independently deployed, or may be some functions of an existing network element or device and is co-deployed with the existing network element or device. For example, the TMF is co-deployed with the AMF, the NEF, or the UPF.

It may be understood that the network element may also be referred to as a "device", an "entity", or the like. The foregoing network elements or functions may be network elements in a hardware device, or may be software functions that are run on dedicated hardware, or may be virtualized functions instantiated on a platform (for example, a cloud platform). One or more services may be obtained through division into the foregoing network elements or functions. Further, services that exist independently of network functions may occur. In this application, instances of the functions, instances of services included in the functions, or instances of the services that exist independently of network functions may be referred to as service instances.

It should be understood that FIG. 1 is merely an example of an applicable network architecture, and an actually applied network architecture may include more or fewer network elements than those in FIG. 1. The name of each network element used in embodiments of this application may remain the same in function but have a different name in the future communication system.

Embodiments of this application provide a plurality of security authentication solutions, to improve communication security, for example, one-way authentication performed by the requester on the terminal device for ensuring that the terminal device is a terminal device of the requester; for example, one-way authentication performed by the terminal device on the requester for ensuring that the requester is trusted; for another example, two-way authentication between the terminal device and the requester; for example, one-way authentication performed by the operator on the terminal device; for example, one-way authentication performed by the terminal device on the operator; and for example, two-way authentication between the operator and the terminal device. In some scenarios in which physical environments are secure, for example, the terminal device is located in a campus environment, authentication may be skipped to improve efficiency (because an authentication procedure requires an additional interaction procedure between the terminal device and the requester, which increases time consumption).

The method provided in embodiments of this application may be applied to industries, enterprises, agriculture, animal husbandry, forestry, and the like. In an example for description, the method may be applied to product management in the industries. For example, a passive or semi-passive internet of things tag is embedded or pasted on a product, so that management such as scanning and statistics collection can be automatically performed on the product. For example, in terms of storage, transportation, materials, and the like, a reader automatically collects information about goods stored in warehouses, shopping malls, and the like in a logistics process of the goods, and then an administrator can quickly query the information about the goods in a system, so that a risk of discarding or stealing the goods is reduced, a handover speed of the goods can be improved, accuracy can be improved, and unauthorized sales and anti-counterfeiting can be avoided. In another example for description, the method may be applied to asset management. For example, in some places with large assets or valuables, such as libraries, art museums, and museums, a complete management procedure or strict protection measures are required. A passive or semi-passive internet of things tag is embedded or pasted on a book or valuables. When storage information of the book or valuables changes abnormally, an administrator may be notified in time, to handle a related situation. In another example for description, the method may be applied to industrial management on a device (for example, a pallet truck, a trailer, or an automated guided vehicle (automated guided vehicle, AGV)). For example, a life cycle, utilization, a location, and the like of the device may be managed by installing a tag on the device. In still another example for description, the method may be applied to management on a breeding product (such as a pig, a cattle, a sheep, or a chicken) in the animal husbandry. For example, management such as statistics collection on the breeding product may be implemented by fastening a tag on the breeding product. In still another example for description, the method may be applied to tree management in the forestry. For example, management such as statistics collection on a tree may be implemented by fastening a tag on the tree.

The following describes the technical solutions in embodiments of this application with reference to the accompanying drawings in embodiments of this application.

As shown in FIG. 2, a diagram of a communication procedure is provided. The communication procedure may be applicable to the following plurality of scenarios.

Scenario 1: An authentication mode is preconfigured in a first terminal, and authentication is performed between the first terminal and a requester. The authentication between the first terminal and the requester may include two-way authentication between the first terminal and the requester, one-way authentication performed by the requester on the first terminal, and one-way authentication performed by the first terminal on the requester.

Scenario 2: No authentication mode is configured in a first terminal, and authentication is performed between the first terminal and a requester.

Scenario 3: An authentication mode is preconfigured in a first terminal, and authentication is performed between the first terminal and a first network corresponding to a core network device (the first network corresponding to the core network device may be referred to as an operator network). The authentication between the first terminal and the first network corresponding to the core network device may include two-way authentication between the first terminal and the first network corresponding to the core network device, one-way authentication performed by the first network corresponding to the core network device on the first terminal, and one-way authentication performed by the first terminal on the first network corresponding to the core network device.

Scenario 4: No authentication mode is configured in a first terminal, and authentication is performed between the first terminal and a first network corresponding to a core network device (the first network corresponding to the core network device may be referred to as an operator network).

Performing authentication between the first terminal and the first network corresponding to the core network device may be understood as performing authentication between the first terminal and an authentication device in the first network.

The communication procedure shown in FIG. 2 may be applied to the communication system shown in FIG. 1. The requester may be the requester in FIG. 1, for example, the third-party device, the server (server), the P-IoT server, the application server AS, the application function AF, the passive internet of things application function (P-IoT AF), or the internet of things application function (IoT AF). The core network device may be the core network device in FIG. 1, for example, the AMF, the UDM, the TMF, the AUSF, the NSSAAF, the SMF, the UPF, the PCF, the NEF, or the UDR. The core network device may directly communicate with the requester, or may communicate with the requester via another core network device. The first terminal may be the terminal device in FIG. 1.

The diagram of the procedure shown in FIG. 2 includes at least the following steps.

Step 201: The requester sends first information to the core network device, where the first information indicates the first terminal.

Correspondingly, the core network device receives the first information from the requester.

It may be understood that in addition to indicating the first terminal, the first information may further indicate another terminal.

The first information may indicate the first terminal in one or more of the following manners.

For example, the first information includes a terminal identifier range, and the terminal identifier range includes an identifier of the first terminal.

For example, the first information includes an identifier of one or more terminals, and the identifier of the one or more terminals include an identifier of the first terminal.

For example, the first information includes a terminal type, and the first terminal belongs to the type.

For example, the first information includes information about the requester. The information about the requester may indicate a terminal identifier range or an identifier of one or more terminals corresponding to (or managed by) the requester. The terminal identifier range or the identifier of the one or more terminals corresponding to (or managed by) the requester include an identifier of the first terminal.

The terminal identifier range or the identifier of the one or more terminals corresponding to (or managed by) the requester may be stored or configured in the core network device, or may be stored or configured in the another core network device. The core network device may send the information about the requester to the another core network device. The another core network device obtains, based on the information about the requester, the terminal identifier range or the identifier of the one or more terminals corresponding to (or managed) the requester, and sends the terminal identifier range or the identifier of the one or more terminals to the core network device. For example, the another core network device may include a core network device such as the UDM, the UDR, the AUSF, the NEF, the PCF, the SMF, the TMF, the NSSAAF, or the AMF.

The information about the requester may include one or more of the following: an AF identifier (AF identifier or AF identity, AF ID), a service identifier (service identifier or service identity, service ID), an application identifier (application identifier or application identity, APP ID), address information of the AF, port information of the AF, address information of the application server AS, and port information of the application server AS. An address of the AF or the AS is, for example, an internet protocol (internet protocol address, IP) address, a media access control (media access control, MAC) address, or an IPv6 prefix. A port of the AF or the AS is, for example, a transmission control protocol (transmission control protocol, TCP) port or a user datagram protocol (user datagram protocol, UDP) port.

In a possible implementation, the first information may indicate to perform a first operation on the first terminal. The first operation may be an operation of obtaining the identifier of the first terminal (which may also be referred to as a stock taking operation, an inventory taking operation, or an inventory), a read operation, a write operation, a delete operation, an encryption operation, an access operation, a block write operation, a block erase operation, a kill operation, or the like. For example, the first information includes information about the first operation, and the first operation is indicated by using the information about the first operation. Further, optionally, the first information further includes an operation parameter corresponding to the first operation. The information about the first operation may be referred to as an instruction type, or the information about the first operation and the operation parameter corresponding to the first operation are collectively referred to as an instruction type. For example, an operation parameter corresponding to the read operation may include a read storage area, a start byte address of the read storage area, a quantity of bytes of the read storage area, and the like. An operation parameter corresponding to the write operation may include a write storage area, a start byte of the read storage area, and written data. In addition, the operation of obtaining the identifier of the first terminal (which may also be referred to as the stock taking operation, the inventory taking operation, or the inventory) may not need to be carried in the first information. For example, when the first information does not include the first operation, it may indicate that the first information is used to obtain the identifier of the first terminal.

In a possible scenario, the requester needs to periodically perform the first operation on the first terminal. In this scenario, in a possible implementation, when a cycle arrives, the requester requests the core network device to perform the first operation on the first terminal. In another possible implementation, the requester sends cycle information to the core network device. Correspondingly, the core network device may receive the cycle information from the requester, and store the cycle information. Further, the core network device periodically triggers execution of the first operation on the first terminal, and the requester does not need to periodically request the core network device to perform the first operation on the first terminal. Therefore, signaling exchange can be reduced.

Step 202: The core network device obtains an authentication mode corresponding to the first terminal.

The core network device obtains the authentication mode corresponding to the first terminal in a plurality of manners, including but not limited to the following manners.

In a manner, the requester indicates the authentication mode corresponding to the first terminal to the core network device. For example, the requester indicates the authentication mode corresponding to the first terminal to the core network device by using the first information. Specifically, the first information may indicate the authentication mode corresponding to the first terminal, and the core network device may obtain, based on the first information, the authentication mode corresponding to the first terminal. Certainly, the requester may alternatively indicate the authentication mode corresponding to the first terminal to the core network device by using other information different from the first information. In this manner, if an authentication mode is preconfigured in the first terminal, generally, the authentication mode indicated by the requester to the core network device needs to be the same as the authentication mode preconfigured in the first terminal. Certainly, a case in which the authentication mode indicated by the requester to the core network device is different from the authentication mode preconfigured in the first terminal is not excluded. When the authentication mode preconfigured in the first terminal is different from the authentication mode indicated by the requester to the core network device, in a possible implementation, the first terminal may perform an authentication procedure in the authentication mode indicated by the requester. For example, a priority of the authentication mode indicated by the requester is higher than that of the authentication mode preconfigured in the first terminal. The authentication mode indicated by the requester to the core network device may be triggered as required or dynamically indicated. For example, for a same terminal, the requester may indicate a same or different authentication modes at different time.

In a manner, first context information, first policy information, a first service configuration (for example, a service profile), or first subscription data of the first terminal includes the authentication mode corresponding to the first terminal (an authentication mode corresponding to a terminal may be an authentication mode supported by the terminal). The core network device obtains the first context information, the first policy information, the first service configuration, or the first subscription data of the first terminal. The core network device obtains, based on the first context information, the first policy information, the first service configuration, or the first subscription data, the authentication mode corresponding to the first terminal. The first context information, the first policy information, the first service configuration, or the first subscription data of the first terminal is stored in one or more of the following devices: an access management device (for example, the AMF), a policy control device (for example, the PCF), an authentication device (for example, the AUSF), a unified data management device (for example, the UDM), a user database (for example, the UDR), a session management device (for example, the SMF), and a tag management function (for example, the TMF).

In a manner, second context information, second policy information, a second service configuration, or second subscription data of the requester includes an authentication mode or authentication modes corresponding to the one or more terminals managed by the requester (the authentication mode corresponding to the terminal may be an authentication mode supported by the terminal), and the one or more terminals managed by the requester include the first terminal. The core network device obtains the second context information, the second policy information, the second service configuration, or the second subscription data of the requester. The core network device obtains, based on the second context information, the second policy information, the second service configuration, or the second subscription data, the authentication mode corresponding to the first terminal. The second context information, the second policy information, the second service configuration, or the second subscription data of the requester may be stored in a control plane function such as the UDM, the UDR, the AUSF, the NSSAAF, the AMF, the TMF, or the PCF.

The authentication mode corresponding to the first terminal may be a two-way authentication mode, a one-way authentication mode, or no authentication performed.

When the authentication mode is the two-way authentication mode, the authentication mode may be specifically any one of the following: two-way authentication between the first terminal and the requester, and two-way authentication between the first terminal and the first network corresponding to the core network device.

When the authentication mode is the one-way authentication mode, the authentication mode may be specifically any one of the following: one-way authentication performed by the requester on the first terminal, one-way authentication performed by the first network corresponding to the core network device on the first terminal, one-way authentication performed by the first terminal on the requester, and one-way authentication performed by the first terminal on the first network corresponding to the core network device.

Step 203: The core network device performs (performing may be understood as initiating, triggering, or participating) a procedure corresponding to the authentication mode obtained in step 202.

The core network device obtains the authentication mode corresponding to the first terminal, and performs the corresponding procedure, so that security can be improved.

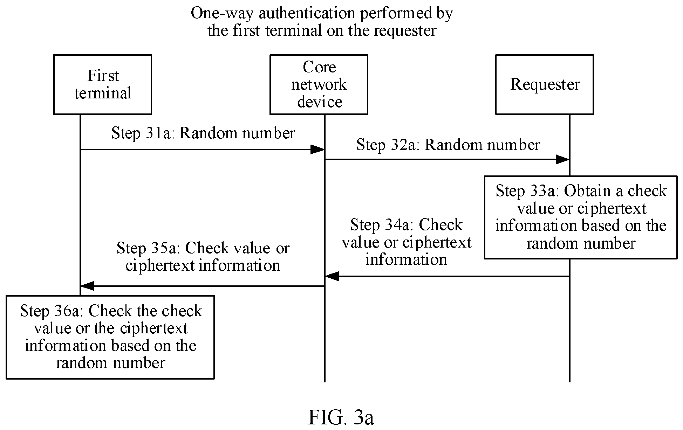

The following describes, in detail with reference to FIG. 3a to FIG. 3f, a procedure corresponding to each authentication mode. A random number (RAND) may be a bit string (for example, a bit string with a length of 128 bits), or may be a character string or a number. A construction or a length of the random number is not limited in this application. A check value may be a message authentication code (message authentication code, MAC). The check value may be a bit string (for example, a bit string with a length of 32 bits), or may be a character string or a number. A construction or a length of the check value is not limited in this application. Ciphertext information may be a bit string (for example, a bit string with a length of 32 bits), a character string, or a number. A construction or a length of the ciphertext information is not limited in this application. Plaintext information may be a bit string (for example, a bit string with a length of 128 bits), a character string, or a number. A construction or a length of the plaintext information is not limited in this application.

As shown in FIG. 3a, a diagram of a plurality of possible procedures of one-way authentication performed by the first terminal on the requester is described.

Step 31a: The first terminal sends a random number to the core network device, and correspondingly, the core network device receives the random number from the first terminal.

The random number may be preconfigured in the first terminal, or may be randomly generated by the first terminal. In a possible implementation, the random number is carried in a request (for example, registration request registration request) message sent by the first terminal to the core network device (for example, the AMF or the TMF).

Step 32a: The core network device sends the random number to the requester, and correspondingly, the requester receives the random number from the core network device.

Step 33a: The requester obtains a check value or ciphertext information based on the random number.

For example, a process of obtaining the check value or the ciphertext information includes: The requester obtains the check value or the ciphertext information based on the random number and a preconfigured key.

In a possible implementation, the requester performs an operation based on the random number and a preconfigured security key, to obtain the check value.

In another possible implementation, the requester encrypts the random number by using a preconfigured security key, to obtain the ciphertext information.

Step 34a: The requester sends the check value or the ciphertext information to the core network device, and correspondingly, the core network device receives the check value or the ciphertext information from the requester.

Step 35a: The core network device sends the check value or the ciphertext information to the first terminal, and correspondingly, the first terminal receives the check value or the ciphertext information.

In a possible implementation, the check value or the ciphertext information is carried in a response (for example, registration response registration accept) message sent by the core network device (for example, the AMF or the TMF) to the first terminal.

Step 36a: The first terminal checks the check value or the ciphertext information based on the random number.

For example, a process of checking the check value or the ciphertext information includes: checking the check value or the ciphertext information based on the random number and the preconfigured key.

In a possible implementation, a process of checking the ciphertext information includes: decrypting the ciphertext information to obtain a value (the value may be referred to as plaintext information), and comparing the value obtained through decryption with the random number (the random number sent by the first terminal to the core network device in step 31a). When the value obtained through decryption is the same as the random number, the check succeeds, and the one-way authentication performed by the first terminal on the requester succeeds; or when the value obtained through decryption is different from the random number, the check fails, and the one-way authentication performed by the first terminal on the requester fails.

In another possible implementation, a process of checking the check value includes: performing an operation on the random number sent by the first terminal in step 31a and the preconfigured key, to obtain a check value, and comparing the check value with the check value received by the first terminal in step 35a. When the check value is the same as the check value received by the first terminal, the check succeeds, and the one-way authentication performed by the first terminal on the requester succeeds; or when the check value is different from the check value received by the first terminal, the check fails, and the one-way authentication performed by the first terminal on the requester fails.

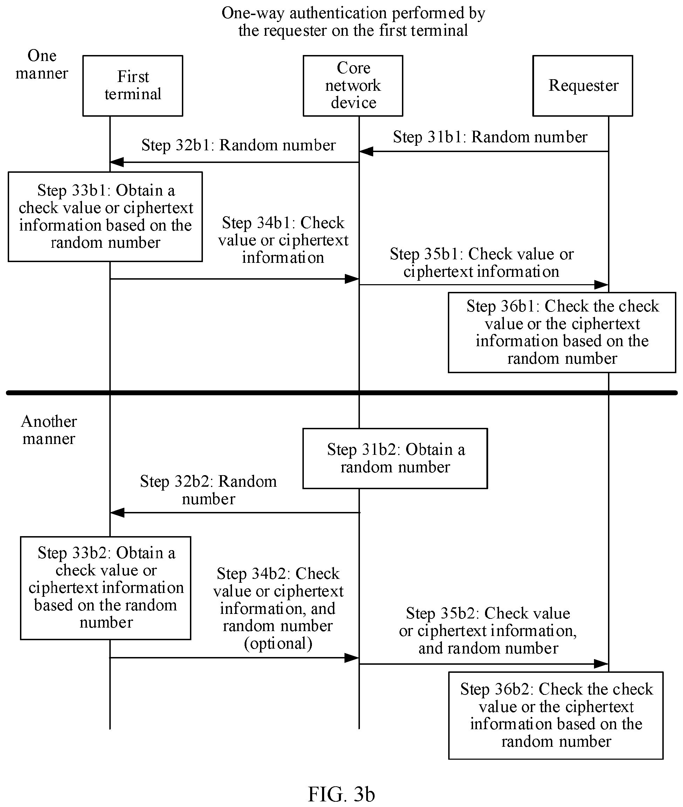

As shown in FIG. 3b, a diagram of a plurality of possible procedures of one-way authentication performed by the requester on the first terminal is described.

In a possible implementation, a procedure of one-way authentication performed by the requester on the first terminal includes the following steps.

Step 31b1: The requester sends a random number to the core network device, and correspondingly, the core network device receives the random number from the requester.

For example, the random number may be specific to the first terminal. The requester may send different random numbers to the core network device for different terminals, to improve security of authentication procedures. For example, the random number may be specific to a group terminal.

Step 32b1: The core network device sends the random number to the first terminal, and correspondingly, the first terminal receives the random number.

In a possible implementation, the random number is carried in a request (for example, authentication request (Authentication Request) or authentication request (Authorization Request)) message sent by the core network device (for example, the AMF or the TMF) to the first terminal. In another possible implementation, the core network device may send the random number to an access network device, and the access network device broadcasts the random number. After successfully performing random access, one or more terminals within a coverage area of the access network device may obtain a check value or ciphertext information based on the broadcast random number. In a possible implementation, the core network device may send a plurality of random numbers to the access network device, and the access network device may broadcast different random numbers at different moments. For example, the access network device may broadcast different random numbers in random access procedures in different cycles, to improve security. For example, a random access procedure in a cycle may be distinguished by broadcasting a select message. For example, select messages sent by the access network device at different moments may include different random numbers.

Step 33b1: The first terminal obtains a check value or ciphertext information based on the random number.

For example, a process of obtaining the check value or the ciphertext information includes: The first terminal obtains the check value or the ciphertext information based on the random number and a preconfigured key.

In a possible implementation, the first terminal performs an operation on the random number and the preconfigured key, to obtain the check value.

In another possible implementation, the first terminal encrypts the random number by using a preconfigured security key, to obtain the ciphertext information.

Step 34b 1: The first terminal sends the check value or the ciphertext information to the core network device, and correspondingly, the core network device receives the check value or the ciphertext information from the first terminal.

In a possible implementation, the check value or the ciphertext information is carried in a response (for example, authentication response (Authentication Response) or authentication response (Authorization Response)) message sent by the first terminal to the core network device (for example, the AMF or the TMF).

Step 35b1: The core network device sends the check value or the ciphertext information to the requester, and correspondingly, the requester receives the check value or the ciphertext information.

Step 36b1: The requester checks the check value or the ciphertext information based on the random number.

For example, a process of checking the check value or the ciphertext information includes: checking the check value or the ciphertext information based on the random number and the preconfigured key.

In a possible implementation, a process of checking the ciphertext information includes: decrypting the ciphertext information to obtain a value (the value may be referred to as plaintext information), and comparing the value obtained through decryption with the random number (the random number sent by the requester to the core network device in step 31b1). When the value obtained through decryption is the same as the random number, the check succeeds, and the one-way authentication performed by the requester on the first terminal succeeds; or when the value obtained through decryption is different from the random number, the check fails, and the one-way authentication performed by the requester on the first terminal fails.

In another possible implementation, a process of checking the check value includes: performing an operation on the random number sent by the requester in step 31b1 and the preconfigured key, to obtain a check value, and comparing the check value with the check value received by the requester in step 35b1. When the check value is the same as the check value received by the requester, the check succeeds, and the one-way authentication performed by the requester on the first terminal succeeds; or when the check value is different from the check value received by the requester, the check fails, and the one-way authentication performed by the requester on the first terminal fails.

In another possible implementation, a procedure of one-way authentication performed by the requester on the first terminal includes the following steps.

Step 31b2: The core network device obtains a random number.

For example, a process of obtaining the random number includes: The core network device generates the random number, or obtains the random number from the another core network device. In a possible implementation, the core network device is the AMF, and the another core network device is the UDM, the UDR, the NSSAAF, the AUSF, the TMF, or a function device configured to manage terminals.

Step 32b2 (same as step 32b1): The core network device sends the random number to the first terminal, and correspondingly, the first terminal receives the random number from the core network device.

In a possible implementation, the random number is carried in a request (for example, authentication request (Authentication Request) or authentication request (Authorization Request)) message sent by the core network device (for example, the AMF) to the first terminal. In another possible implementation, the core network device sends the random number to an access network device, and the access network device sends the random number to the terminal. For example, the access network device may broadcast the random number. For example, the random number may be specific to a group terminal. For example, the core network device may send the random number to the access network device, and the access network device broadcasts the random number. After successfully performing random access, one or more terminals within a coverage area of the access network device may obtain a check value or ciphertext information based on the broadcast random number. In a possible implementation, the core network device may send a plurality of random numbers to the access network device, and the access network device may broadcast different random numbers at different moments. For example, the access network device may broadcast different random numbers in random access procedures in different cycles, to improve security. For example, a random access procedure in a cycle may be distinguished by broadcasting a select message. For example, select messages sent by the access network device at different moments may include different random numbers.

Step 33b2 (same as step 33b1): The first terminal obtains a check value or ciphertext information based on the random number.

For example, a process of obtaining the check value or the ciphertext information includes: The first terminal obtains the check value or the ciphertext information based on the random number and a preconfigured key.

In a possible implementation, the first terminal may perform an operation on the random number and the preconfigured key, to obtain the check value.

In another possible implementation, the first terminal encrypts the random number by using the preconfigured key, to obtain the ciphertext information.

Step 34b2: The first terminal sends the check value or the ciphertext information to the core network device, and correspondingly, the core network device receives the check value or the ciphertext information from the first terminal.

In a possible implementation, the check value or the ciphertext information is carried in a response (for example, authentication response (Authentication Response) or authentication response (Authorization Response)) message sent by the first terminal to the core network device (for example, the AMF).

Further, optionally, the first terminal may also send the random number (the random number sent by the core network device to the first terminal in step 32b2) to the core network device when sending the check value or the ciphertext information to the core network device. When the first terminal does not send the random number to the core network device, an eavesdropper may be prevented from listening to the random number for the first terminal through an air interface, which can improve security and reliability.

Step 35b2: The core network device sends the random number (the random number obtained by the core network device in step 31b2 or the random number from the first terminal in step 34b2) and the check value (or the ciphertext information) to the requester, and correspondingly, the requester receives the random number and the check value (or the ciphertext information) from the core network device.

For example, when the first terminal does not send the random number to the core network device, the core network device may send the random number obtained in step 31b2 to the requester.

**In** a specific example, the core network device is the AMF or the TMF, and the AMF communicates with the requester via the NEF. The AMF may first send the random number and the check value (or the ciphertext information) to the NEF, and then the NEF sends the random number and the check value (or the ciphertext information) to the requester.

In a possible implementation, the random number and the check value (or the ciphertext information) may be carried in a request (for example, authentication request (Authentication Request) or authentication request (Authorization Request)) message sent by the AMF to the NEF.

Step 36b2: The requester checks the check value or the ciphertext information based on the random number.

For example, a process of checking the check value or the ciphertext information includes: checking the check value or the ciphertext information based on the random number and the preconfigured key.

In a possible implementation, a process of checking the ciphertext information includes: decrypting the ciphertext information to obtain a value (the value may be referred to as plaintext information), and comparing the value obtained through decryption with the random number (the random number received from the core network device in step 35b2). When the value obtained through decryption is the same as the random number, the check succeeds, and the one-way authentication performed by the requester on the first terminal succeeds; or when the value obtained through decryption is different from the random number, the check fails, and the one-way authentication performed by the requester on the first terminal fails.

In another possible implementation, a process of checking the check value includes: performing an operation on the random number received by the requester in step 35b2 and the preconfigured key, to obtain a check value, and comparing the check value with the check value received by the requester in step 35b2. When the check value is the same as the check value received by the requester, the check succeeds, and the one-way authentication performed by the requester on the first terminal succeeds; or when the check value is different from the check value received by the requester, the check fails, and the one-way authentication performed by the requester on the first terminal fails.

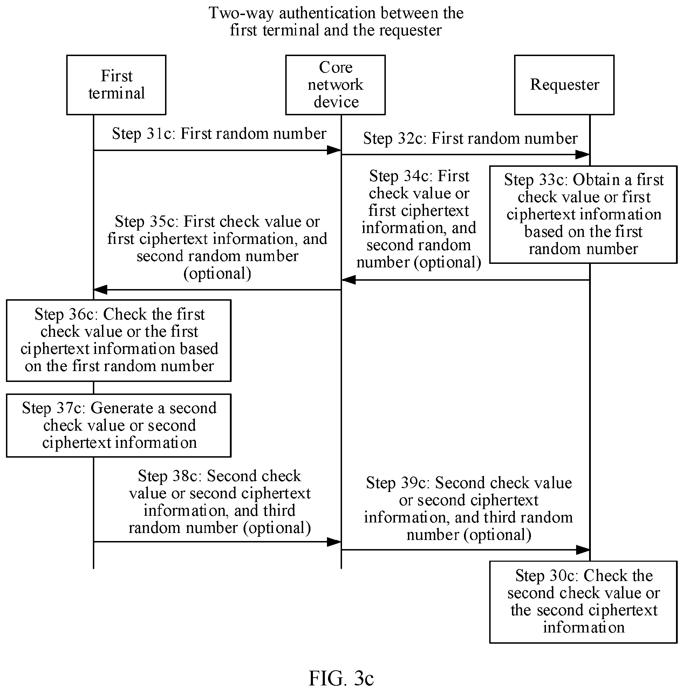

As shown in FIG. 3c, a diagram of a plurality of possible procedures of two-way authentication between the first terminal and the requester is described.

Step 31c: The first terminal sends a first random number to the core network device, and correspondingly, the core network device receives the first random number from the first terminal.

The first random number may be preconfigured in the first terminal, or may be randomly generated by the first terminal. In a possible implementation, the random number is carried in a request (for example, registration request (Registration Request)) message sent by the first terminal to the core network device (for example, the AMF or the TMF).

Step 32c: The core network device sends the first random number to the requester, and correspondingly, the requester receives the first random number.

Step 33c: The requester obtains a first check value or first ciphertext information based on the first random number.

This process may include the following manners.

Manner 1: The requester obtains the first ciphertext information based on the first random number and a preconfigured key. In a possible implementation, the requester may encrypt the first random number by using a preconfigured security key, to obtain the first ciphertext information.

Manner 2: The requester obtains the first check value based on the first random number and a preconfigured key. In a possible implementation, the requester may perform an operation on the first random number and the preconfigured key, to obtain the first check value.

Manner 3: The requester obtains the first ciphertext information based on the first random number and a second random number. For example, this process includes: The requester obtains the first ciphertext information based on the first random number, the second random number, and a preconfigured key. In a possible implementation, the requester encrypts the first random number and the second random number by using the preconfigured key, to obtain the first ciphertext information. The second random number may be generated by the requester or preconfigured in the requester.

Manner 4: The requester obtains the first check value based on the first random number and a second random number. For example, this process includes: The requester obtains the first check value based on the first random number, the second random number, and a preconfigured key. In a possible implementation, the requester may perform an operation on the first random number, the second random number, and the preconfigured key, to obtain the first check value. The second random number may be generated by the requester or preconfigured in the requester.

Step 34c: The requester sends the first check value or the first ciphertext information to the core network device, and correspondingly, the core network device receives the first check value or the first ciphertext information from the requester.

In step 33c, when the requester obtains the first check value or the first ciphertext information in Manner 1, Manner 2, or Manner 4, optionally, the requester may further send the second random number to the core network device.

Step 35c: The core network device sends the first check value or the first ciphertext information to the first terminal, and correspondingly, the first terminal receives the first check value or the first ciphertext information.

In a possible implementation, the first check value or the first ciphertext information is carried in a request (for example, authentication request (Authentication Request) or authentication request (Authorization Request)) message sent by the core network device (for example, the AMF or the TMF) to the first terminal.

Optionally, in a scenario in which the second random number is received in step 34c, the core network device may further send the second random number to the first terminal.

Step 36c: The first terminal checks the first check value or the first ciphertext information based on the first random number.

For example, a process of checking the first check value or ciphertext information includes: checking the first check value or ciphertext information based on the first random number and the preconfigured key.

A check process corresponding to Manner 1 in step 33c includes: decrypting the first ciphertext information to obtain a value (the value may be referred to as plaintext information), and comparing the value obtained through decryption with the first random number (the first random number sent by the first terminal in step 3 1c). When the value obtained through decryption is the same as the first random number, the check succeeds, and one-way authentication performed by the first terminal on the requester succeeds; or when the value obtained through decryption is different from the first random number, the check fails, and one-way authentication performed by the first terminal on the requester fails.

A check process corresponding to Manner 2 in step 33c includes: performing an operation on the first random number sent by the first terminal in step 31c and the preconfigured key, to obtain a check value, and comparing the check value with the first check value received by the first terminal in step 35c. When the check value is the same as the first check value received by the first terminal, the check succeeds, and one-way authentication performed by the first terminal on the requester succeeds; or when the check value is different from the first check value received by the first terminal, the check fails, and one-way authentication performed by the first terminal on the requester fails.

A check process corresponding to Manner 3 in step 33c includes: decrypting the first ciphertext information to obtain two values (the values may be referred to as plaintext information), and comparing the two values obtained through decryption with the first random number (the first random number sent by the first terminal in step 31c). When a value (which may be limited to a 1^{st} value or a 2^{nd} value in a sequence after decryption, or may not be limited in a sequence after decryption) is the same as the first random number, one-way authentication performed by the first terminal on the requester succeeds; or when any value is different from the first random number, one-way authentication performed by the first terminal on the requester fails.

A check process corresponding to Manner 4 in step 33c includes: performing an operation on the first random number sent by the first terminal in step 3 1c, the second random number received in step 35c, and the preconfigured key, to obtain a check value, and comparing the check value with the first check value received by the first terminal in step 35c. When the check value is the same as the first check value received by the first terminal, the check succeeds, and one-way authentication performed by the first terminal on the requester succeeds; or when the check value is different from the first check value received by the first terminal, the check fails, and one-way authentication performed by the first terminal on the requester fails.

Step 37c: The first terminal generates a second check value or second ciphertext information on the basis that the one-way authentication performed by the first terminal on the requester succeeds.

If the first terminal receives the second random number in step 35c (that is, corresponding to Manner 1, Manner 2, or Manner 4), a process in which the first terminal generates the second check value or the second ciphertext information includes: The first terminal obtains the second check value or the second ciphertext information based on the second random number and the preconfigured key. In a possible implementation, the first terminal performs an operation on the second random number and the preconfigured key, to obtain the second check value. In another possible implementation, the first terminal encrypts the second random number by using the preconfigured key, to obtain the second ciphertext information.

If the first terminal does not receive the second random number in step 35c (that is, corresponding Manner 3), a process in which the first terminal generates the second check value or the second ciphertext information includes: The first terminal generates the second check value or the second ciphertext information based on a third random number and a value that is obtained through decryption other than the first random number (when the one-way authentication performed by the first terminal on the requester succeeds, the value that is obtained through decryption other than the first random number is a value the same as the second random number). The third random number may be preconfigured in the first terminal, or may be randomly generated by the first terminal. For example, the first terminal generates the second check value or the second ciphertext information based on the third random number, the value that is obtained through decryption other than the first random number, and the preconfigured key. In a possible implementation, the first terminal encrypts, by using the preconfigured key, the third random number and the value that is obtained through decryption other than the first random number, to obtain the second ciphertext information. In a possible implementation, the first terminal performs an operation on the third random number, the value that is obtained through decryption other than the first random number, and the preconfigured key, to obtain the second check value.

Step 38c: The first terminal sends the second check value or the second ciphertext information to the core network device, and correspondingly, the core network device receives the second check value or the second ciphertext information from the first terminal.

Optionally, the first terminal sends the third random number to the core network device. For example, when the first terminal performs, in step 37c, the operation on the third random number, the value that is obtained through decryption other than the first random number, and the preconfigured key, to obtain the second check value, the first terminal sends the third random number to the core network device.

In a possible implementation, the second check value (optionally, further including the third random number) is carried in a response (for example, authentication response (Authentication Response) or authentication response (Authorization Response)) message sent by the first terminal to the core network device (for example, the AMF or the TMF).

Step 39c: The core network device sends the second check value or the second ciphertext information to the requester, and correspondingly, the requester receives the second check value or the second ciphertext information.

Optionally, when receiving the third random number in step 38c, the core network device may further send the third random number to the requester.

Step 30c: The requester checks the second check value or the second ciphertext information based on the second random number.

For example, a process of checking the second check value or the second ciphertext information includes: checking the second check value or the second ciphertext information based on the second random number and the preconfigured key.

In a possible implementation, if the first terminal encrypts, in step 37c, the second random number by using the preconfigured key, to obtain the second ciphertext information, a process in which the requester checks the second ciphertext information includes: decrypting the second ciphertext information to obtain a value (the value may be referred to as plaintext information), and comparing the value obtained through decryption with the second random number (the second random number sent by the requester in step 34c). When the value obtained through decryption is the same as the second random number, the check succeeds, and one-way authentication performed by the requester on the first terminal succeeds; or when the value obtained through decryption is different from the second random number, the check fails, and one-way authentication performed by the requester on the first terminal fails.

In a possible implementation, if the first terminal performs, in step 37c, the operation on the second random number and the preconfigured key, to obtain the second check value, a process in which the requester checks the second check value includes: performing an operation on the second random number sent by the requester in step 34c and the preconfigured key, to obtain a check value, and comparing the check value with the second check value received by the requester in step 39c. When the check value is the same as the second check value received by the requester, the check succeeds, and one-way authentication performed by the requester on the first terminal succeeds; or when the check value is different from the second check value received by the requester, the check fails, and one-way authentication performed by the requester on the first terminal fails.

In a possible implementation, if the first terminal encrypts, in step 37c by using the preconfigured key, the third random number and the value that is obtained through decryption other than the first random number, to obtain the second ciphertext information, a process in which the requester checks the second ciphertext information includes: decrypting the second ciphertext information to obtain two values (the values may be referred to as plaintext information), and comparing the two values obtained through decryption with the second random number (the second random number in Manner 3 in step 33c). When a value (which may be limited to a 1^{st} value or a 2^{nd} value in a sequence after decryption, or may not be limited in a sequence after decryption) is the same as the second random number, one-way authentication performed by the requester on the first terminal succeeds; or when any value is different from the second random number, one-way authentication performed by the requester on the first terminal fails.

In another possible implementation, if the first terminal performs, in step 37c, the operation on the third random number, the value that is obtained through decryption other than the first random number, and the preconfigured key, to obtain the second check value, a process in which the requester checks the second check value includes: performing an operation on the third random number received by the requester in step 39c, the second random number generated by the requester, and the preconfigured key, to obtain a check value, and comparing the check value with the second check value received by the requester in step 39c. When the check value is the same as the second check value received by the requester, the check succeeds, and one-way authentication performed by the requester on the first terminal succeeds; or when the check value is different from the second check value received by the requester, the check fails, and one-way authentication performed by the requester on the first terminal fails.

If the one-way authentication performed by the first terminal on the requester succeeds, and the one-way authentication performed by the requester on the first terminal succeeds, the two-way authentication between the requester and the first terminal succeeds.

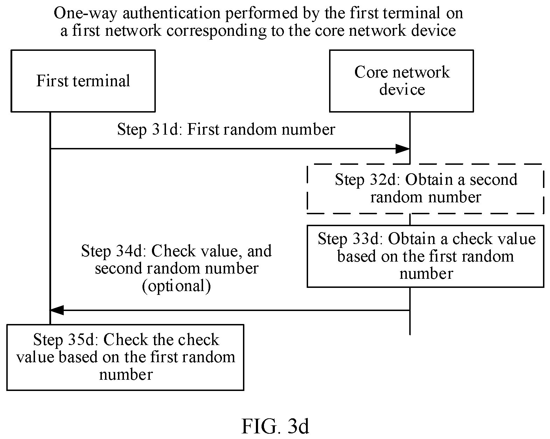

As shown in FIG. 3d, a diagram of a plurality of possible procedures of one-way authentication performed by the first terminal on the first network corresponding to the core network device is described.

Step 31d: The first terminal sends a first random number to the core network device, and correspondingly, the core network device receives the first random number from the first terminal.

The first random number may be preconfigured in the first terminal or randomly generated by the first terminal. In a possible implementation, the random number is carried in a request (for example, registration request (Registration Request)) message sent by the first terminal to the core network device (for example, the AMF or the TMF).

Step 32d: The core network device obtains a second random number.

Step 32d is an optional step, and may not be performed.

One manner in which the core network device obtains the second random number is that the core network device generates the second random number, and another manner is that the core network device obtains the second random number from the another core network device. In a possible implementation, the core network device is the AMF, and the another core network device is the UDM, the AUSF, the UDR, the NSSAAF, the NEF, the PCF, the TMF, or a function device configured to manage a terminal or a tag.

Step 33d: The core network device obtains a check value or ciphertext information based on the first random number.

This process may include the following manners.

Manner 1: The core network device obtains the ciphertext information based on the first random number and a preconfigured key. In a possible implementation, the core network device may encrypt the first random number by using a preconfigured security key, to obtain the ciphertext information.

Manner 2: The core network device obtains the check value based on the first random number and a preconfigured key. In a possible implementation, the core network device may perform an operation on the first random number and the preconfigured key, to obtain the check value.

Manner 3: The core network device obtains the ciphertext information based on the first random number and a second random number. For example, this process includes: The core network device obtains the ciphertext information based on the first random number, the second random number, and a preconfigured key. In a possible implementation, the core network device encrypts the first random number and the second random number by using the preconfigured key, to obtain the ciphertext information.

Manner 4: The core network device obtains the check value based on the first random number and a second random number. For example, this process includes: The core network device obtains the check value based on the first random number, the second random number, and a preconfigured key. In a possible implementation, the core network device performs an operation on the first random number, the second random number, and the preconfigured key, to obtain the check value.

Step 34d: The core network device sends the check value or the ciphertext information to the first terminal, and correspondingly, the first terminal receives the check value or the ciphertext information from the core network device.

In step 33d, when the core network device obtains the check value or the ciphertext information in Manner 1, Manner 2, or Manner 4, optionally, the core network device may further send the second random number to the first terminal.

In a possible implementation, the check value or the ciphertext information is carried in a registration accept (Registration Accept) message sent by the core network device (for example, the AMF or the TMF) to the first terminal.

Step 35d: The first terminal checks the check value or the ciphertext information based on the first random number.

A check process corresponding to Manner 1 in step 33d includes: decrypting the first ciphertext information to obtain a value (the value may be referred to as plaintext information), and comparing the value obtained through decryption with the first random number (the first random number sent by the first terminal in step 31d). When the value obtained through decryption is the same as the first random number, the check succeeds, and the one-way authentication performed by the first terminal on the first network corresponding to the core network device succeeds; or when the value obtained through decryption is different from the first random number, the check fails, and the one-way authentication performed by the first terminal on the first network corresponding to the core network device fails.

A check process corresponding to Manner 2 in step 33d includes: performing an operation on the first random number sent by the first terminal in step 31d and the preconfigured key, to obtain a check value, and comparing the check value with the check value received by the first terminal in step 34d. When the check value is the same as the check value received by the first terminal, the check succeeds, and the one-way authentication performed by the first terminal on the first network corresponding to the core network device succeeds; or when the check value is different from the check value received by the first terminal, the check fails, and the one-way authentication performed by the first terminal on the first network corresponding to the core network device fails.

A check process corresponding to Manner 3 in step 33d includes: decrypting the ciphertext information to obtain two values (the values may be referred to as plaintext information), and comparing the two values obtained through decryption with the first random number (the first random number sent by the first terminal in step 31c). When a value (which may be limited to a 1^{st} value or a 2^{nd} value in a sequence after decryption, or may not be limited in a sequence after decryption) is the same as the first random number, the check succeeds, and the one-way authentication performed by the first terminal on the first network corresponding to the core network device succeeds; or when any value is different from the first random number, the check fails, and the one-way authentication performed by the first terminal on the first network corresponding to the core network device fails.

A check process corresponding to Manner 4 in step 33d includes: performing an operation on the first random number sent by the first terminal in step 31d, the second random number received in step 34d, and the preconfigured key, to obtain a check value, and comparing the check value with the check value received by the first terminal in step 34d. When the check value is the same as the check value received by the first terminal, the check succeeds, and the one-way authentication performed by the first terminal on the first network corresponding to the core network device succeeds; or when the check value is different from the check value received by the first terminal, the check fails, and the one-way authentication performed by the first terminal on the first network corresponding to the core network device fails.

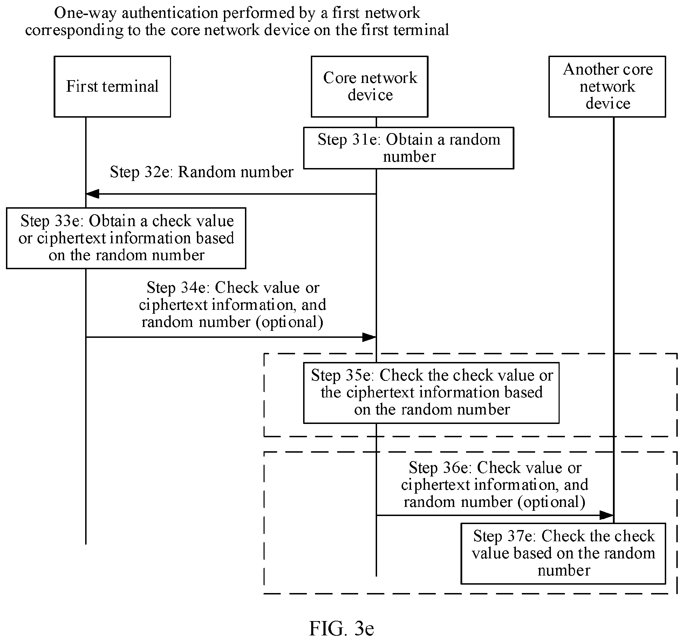

As shown in FIG. 3e, a diagram of a plurality of possible procedures of one-way authentication performed by the first network corresponding to the core network device on the first terminal is described.

Step 31e: The core network device obtains a random number.

One manner in which the core network device obtains the random number is that the core network device generates the random number, and another manner is that the core network device obtains the random number from the another core network device.

In a possible implementation, the core network device is the AMF, and the another core network device is the UDM, the AUSF, the UDR, the NSSAAF, the NEF, the PCF, the TMF, or a function device configured to manage a terminal or a tag. The core network device generates a different random number for each terminal, so that a plurality of terminals do not share a same random number, and security of an authentication procedure can be improved. The core network device generates the random number in the authentication procedure, so that freshness of the random number can be ensured, and security and reliability of the authentication procedure are further improved.

Step 32e: The core network device sends the random number to the first terminal, and correspondingly, the first terminal receives the random number from the core network device.

In a possible implementation, the random number is carried in an authentication request (Authentication Request) message or an authentication request (Authorization Request) message sent by the core network device (for example, the AMF) to the first terminal. In another possible implementation, the core network device may send the random number to an access network device, and the access network device broadcasts the random number. After successfully performing random access, one or more terminals within a coverage area of the access network device may obtain a check value or ciphertext information based on the broadcast random number. In a possible implementation, the core network device may send a plurality of random numbers to the access network device, and the access network device may broadcast different random numbers at different moments. For example, the access network device may broadcast different random numbers in random access procedures in different cycles, to improve security. For example, a random access procedure in a cycle may be distinguished by broadcasting a select message. For example, select messages sent by the access network device at different moments may include different random numbers.

Step 33e: The first terminal obtains a check value or ciphertext information based on the random number.

For example, a process of obtaining the check value or the ciphertext information includes: The first terminal obtains the check value or the ciphertext information based on the random number and a preconfigured key.

In a possible implementation, the first terminal may perform an operation on the random number and the preconfigured key, to obtain the check value.

In another possible implementation, the first terminal encrypts the random number by using the preconfigured key, to obtain the ciphertext information.

Step 34e: The first terminal sends the check value or the ciphertext information to the core network device, and correspondingly, the core network device receives the check value or the ciphertext information from the first terminal.

In a possible implementation, the check value or the ciphertext information is carried in a response (for example, authentication response (Authentication Response) or authentication response (Authorization Response)) message sent by the first terminal to the core network device (for example, the AMF or the TMF).

Further, optionally, when sending the check value or the ciphertext information to the core network device, the first terminal may also send the random number to the core network device. When the first terminal does not send the random number to the core network device, an eavesdropper may be prevented from listening to the random number for the first terminal through an air interface, which can improve the security and the reliability.

Step 35e: The core network device checks the check value or the ciphertext information based on the random number (the random number sent by the core network device in step 32e or the random number received by the core network device in step 34e).

For example, a process of checking the check value or the ciphertext information includes: checking the check value or the ciphertext information based on the random number and the preconfigured key.

In a possible implementation, a process of checking the ciphertext information includes: decrypting the ciphertext information to obtain a value (the value may be referred to as plaintext information), and comparing the value obtained through decryption with the random number (the random number sent by the core network device in step 32e or the random number received by the core network device in step 34e). When the value obtained through decryption is the same as the random number, the check succeeds, and the one-way authentication performed by the first network corresponding to the core network device on the first terminal succeeds; or when the value obtained through decryption is different from the random number, the check fails, and the one-way authentication performed by the first network corresponding to the core network device on the first terminal fails.

In another possible implementation, a process of checking the check value includes: performing an operation on the random number (the random number sent by the core network device in step 32e or the random number received by the core network device in step 34e) and the preconfigured key, to obtain a check value, and comparing the check value with the check value received by the core network device in step 34e. When the check value is the same as the check value received by the core network device, the check succeeds, and the one-way authentication performed by the first network corresponding to the core network device on the first terminal succeeds; or when the check value is different from the check value received by the core network device, the check fails, and the one-way authentication performed by the first network corresponding to the core network device on the first terminal fails.

Step 35e and step 36e are two parallel manners.

Step 36e: The core network device sends the check value or ciphertext information (optionally, further including the random number) to the another core network device.

In a possible implementation, when the core network device generates, in step 31e, the random number instead of obtaining the random number from the another core network device, the core network device may send the random number to the another core network device.

Step 37e: The another core network device checks the check value or the ciphertext information based on the random number (the random number obtained by the core network device from the another core network device in step 31e, or the random number received from the core network device in step 36e).

A check process in step 37e is similar to the check process in step 35e, and mutual reference may be made. Details are not described again.

After the check succeeds, the another core network device sends, to the core network device, information indicating check success/authentication success. In a possible implementation, the check value or the ciphertext information (optionally, further including the random number) may be carried in a request (for example, authentication request (Authentication Request) or authentication request (Authorization Request)) message sent by the core network device to the another core network device. The information indicating check success/authentication success may be carried in a response (for example, authentication response (Authentication Response) or authentication response (Authorization Response)) message sent by the another core network device to the core network device. In a current technology, a random number for a terminal device is usually generated and sent by an authenticator to the terminal device. In this manner, the authenticator is the another core network device, the core network device generates the random number for the first terminal, and sends the random number to the terminal device, and the another core network device does not need to send the random number for the first terminal to the core network device, so that signaling overheads can be reduced.

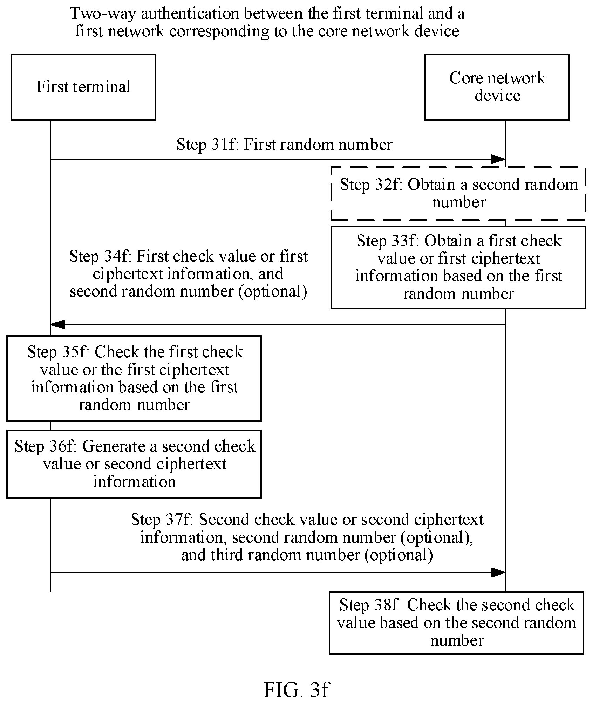

As shown in FIG. 3f, a diagram of a plurality of possible procedures of two-way authentication between the first terminal and the first network corresponding to the core network device is described.

Step 31f: The first terminal sends a first random number to the core network device, and correspondingly, the core network device receives the first random number from the first terminal.

The first random number may be preconfigured in the first terminal, or may be randomly generated by the first terminal. In a possible implementation, the random number is carried in a request (for example, registration request (Registration Request)) message sent by the first terminal to the core network device (for example, the AMF).

Step 32f: The core network device obtains a second random number.

Step 32f is an optional step, and may not be performed.

One manner in which the core network device obtains the second random number is that the core network device generates the second random number, and another manner is that the core network device obtains the random number from the another core network device.

In a possible implementation, the core network device is the AMF, and the another core network device is the UDM, the AUSF, the UDR, the NEF, the NSSAAF, the PCF, or a function device configured to manage a terminal or a tag. The core network device generates a different random number for each terminal, so that a plurality of terminals do not share a same random number, and security of an authentication procedure can be improved. The core network device generates the random number in the authentication procedure, so that freshness of the random number can be ensured, and security and reliability of the authentication procedure are further improved.

Step 33f (similar to step 33c): The core network device obtains a first check value or first ciphertext information based on the first random number.

This process may include the following manners.

Manner 1: The core network device obtains the first ciphertext information based on the first random number and a preconfigured key. In a possible implementation, the core network device may encrypt the first random number by using a preconfigured security key, to obtain the first ciphertext information.

Manner 2: The core network device obtains the first check value based on the first random number and a preconfigured key. In a possible implementation, the core network device may perform an operation on the first random number and the preconfigured key, to obtain the first check value.

Manner 3: The core network device obtains the first ciphertext information based on the first random number and the second random number. For example, this process includes: The core network device obtains the first ciphertext information based on the first random number, the second random number, and a preconfigured key. In a possible implementation, the core network device encrypts the first random number and the second random number by using the preconfigured key, to obtain the first ciphertext information.

Manner 4: The core network device obtains the first check value based on the first random number and the second random number. For example, this process includes: The core network device obtains the first check value based on the first random number, the second random number, and a preconfigured key. In a possible implementation, the core network device may perform an operation on the first random number, the second random number, and the preconfigured key, to obtain the first check value.

Step 34f: The core network device sends the first check value or the first ciphertext information to the first terminal, and correspondingly, the first terminal receives the first check value or the first ciphertext information from the core network device.

In step 33f, when the core network device obtains the first check value or the first ciphertext information in Manner 1, Manner 2, or Manner 4, optionally, the core network device may further send the second random number to the first terminal.

In a possible implementation, the first check value or the first ciphertext information (optionally, further including the second random number) is carried in a registration accept (Registration Accept) message sent by the core network device (for example, the AMF or the TMF) to the first terminal.

Step 35f (similar to step 36c): The first terminal checks the first check value or the first ciphertext information based on the first random number.

For example, a process of checking the first check value or ciphertext information includes: checking the first check value or ciphertext information based on the first random number and the preconfigured key.

A check process corresponding to Manner 1 in step 33f includes: decrypting the first ciphertext information to obtain a value (the value may be referred to as plaintext information), and comparing the value obtained through decryption with the first random number (the first random number sent by the first terminal in step 31f). When the value obtained through decryption is the same as the first random number, the check succeeds, and one-way authentication performed by the first terminal on the first network corresponding to the core network device succeeds; or when the value obtained through decryption is different from the first random number, the check fails, and one-way authentication performed by the first terminal on the first network corresponding to the core network device fails.

A check process corresponding to Manner 2 in step 33f includes: performing an operation on the first random number sent by the first terminal in step 31f and the preconfigured key, to obtain a check value, and comparing the check value with the first check value received by the first terminal in step 34f. When the check value is the same as the first check value received by the first terminal, the check succeeds, and one-way authentication performed by the first terminal on the first network corresponding to the core network device succeeds; or when the check value is different from the first check value received by the first terminal, the check fails, and one-way authentication performed by the first terminal on the first network corresponding to the core network device fails.

A check process corresponding to Manner 3 in step 33f includes: decrypting the first ciphertext information to obtain two values (the values may be referred to as plaintext information), and comparing the two values obtained through decryption with the first random number (the first random number sent by the first terminal in step 31f). When a value (which may be limited to a 1^{st} value or a 2^{nd} value in a sequence after decryption, or may not be limited in a sequence after decryption) is the same as the first random number, one-way authentication performed by the first terminal on the first network corresponding to the core network device succeeds; or when any value is different from the first random number, one-way authentication performed by the first terminal on the first network corresponding to the core network device fails.

A check process corresponding to Manner 4 in step 33f includes: performing an operation on the first random number sent by the first terminal in step 31f, the second random number received in step 34f, and the preconfigured key, to obtain a check value, and comparing the check value with the first check value received by the first terminal in step 34f. When the check value is the same as the first check value received by the first terminal, the check succeeds, and one-way authentication performed by the first terminal on the first network corresponding to the core network device succeeds; or when the check value is different from the first check value received by the first terminal, the check fails, and one-way authentication performed by the first terminal on the first network corresponding to the core network device fails.

Step 36f (similar to step 37c): The first terminal generates a second check value or second ciphertext information on the basis that the one-way authentication performed by the first terminal on the first network succeeds.

If the first terminal receives the second random number in step 34f (that is, corresponding to Manner 1, Manner 2, or Manner 4), a process in which the first terminal generates the second check value or the second ciphertext information includes: The first terminal obtains the second check value or the second ciphertext information based on the second random number and the preconfigured key. In a possible implementation, the first terminal performs an operation on the second random number and the preconfigured key, to obtain the second check value. In another possible implementation, the first terminal encrypts the second random number by using the preconfigured key, to obtain the second ciphertext information.

If the first terminal does not receive the second random number in step 34f (that is, corresponding Manner 3), a process in which the first terminal generates the second check value or the second ciphertext information includes: The first terminal generates the second check value or the second ciphertext information based on a third random number and a value that is obtained through decryption other than the first random number (when the one-way authentication performed by the first terminal on the requester succeeds, the value that is obtained through decryption other than the first random number is a value the same as the second random number). The third random number may be preconfigured in the first terminal, or may be randomly generated by the first terminal. For example, the first terminal generates the second check value or the second ciphertext information based on the third random number, the value that is obtained through decryption other than the first random number, and the preconfigured key. In a possible implementation, the first terminal encrypts, by using the preconfigured key, the third random number and the value that is obtained through decryption other than the first random number, to obtain the second ciphertext information. In a possible implementation, the first terminal performs an operation on the third random number, the value that is obtained through decryption other than the first random number, and the preconfigured key, to obtain the second check value.

Step 37f: The first terminal sends the second check value or the second ciphertext information to the core network device, and correspondingly, the core network device receives the second check value or the second ciphertext information from the first terminal.

Optionally, the first terminal sends the third random number to the core network device. For example, when the first terminal performs, in step 36f, the operation on the third random number, the value that is obtained through decryption other than the first random number, and the preconfigured key, to obtain the second check value, the first terminal sends the third random number to the core network device.

In a possible implementation, the second check value or the second ciphertext information is carried in a response (for example, authentication response (Authentication Response) or authentication response (Authorization Response)) message sent by the first terminal to the core network device (for example, the AMF or the TMF).

Further, optionally, when sending the second check value or the second ciphertext information to the core network device, the first terminal may also send the second random number received in step 34f to the core network device. When the first terminal does not send the second random number to the core network device, malicious listening may be prevented.

Step 38f (similar to step 30c): The core network device checks the second check value or the second ciphertext information based on the second random number.

For example, a process of checking the second check value or the second ciphertext information includes: checking the second check value or the second ciphertext information based on the second random number and the preconfigured key.

In a possible implementation, if the first terminal encrypts, in step 36f, the second random number by using the preconfigured key, to obtain the second ciphertext information, a process in which the core network device checks the second ciphertext information includes: decrypting the second ciphertext information to obtain a value (the value may be referred to as plaintext information), and comparing the value obtained through decryption with the second random number (the second random number sent by the requester in step 34c). When the value obtained through decryption is the same as the second random number, the check succeeds, and one-way authentication performed by the first network corresponding to the core network device on the first terminal succeeds; or when the value obtained through decryption is different from the second random number, the check fails, and one-way authentication performed by the first network corresponding to the core network device on the first terminal fails.

In a possible implementation, if the first terminal performs, in step 36f, the operation on the second random number and the preconfigured key, to obtain the second check value, a process in which the core network device checks the second check value includes: performing an operation on the second random number sent by the core network device in step 34f and the preconfigured key, to obtain a check value, and comparing the check value with the second check value received by the core network device in step 37f. When the check value is the same as the second check value received by the core network device, the check succeeds, and one-way authentication performed by the first network corresponding to the core network device on the first terminal succeeds; or when the check value is different from the second check value received by the core network device, the check fails, and one-way authentication performed by the first network corresponding to the core network device on the first terminal fails.

In a possible implementation, if the first terminal encrypts, in step 36f by using the preconfigured key, the third random number and the value that is obtained through decryption other than the first random number, to obtain the second ciphertext information, a process in which the core network device checks the second ciphertext information includes: decrypting the second ciphertext information to obtain two values (the values may be referred to as plaintext information), and comparing the two values obtained through decryption with the second random number (the second random number in Manner 3 in step 33f). When a value (which may be limited to a 1^{st} value or a 2^{nd} value in a sequence after decryption, or may not be limited in a sequence after decryption) is the same as the second random number, one-way authentication performed by the first network corresponding to the core network device on the first terminal succeeds; or when any value is different from the second random number, one-way authentication performed by the first network corresponding to the core network device on the first terminal fails.

In another possible implementation, if the first terminal performs, in step 36f, the operation on the third random number, the value that is obtained through decryption other than the first random number, and the preconfigured key, to obtain the second check value, a process in which the core network device checks the second check value includes: performing an operation on the third random number received in step 37f, the second random number obtained in step 32f, and the preconfigured key, to obtain a check value, and comparing the check value with the second check value received by the core network device in step 37f. When the check value is the same as the second check value received by the core network device, the check succeeds, and one-way authentication performed by the first network corresponding to the core network device on the first terminal succeeds; or when the check value is different from the second check value received by the core network device, the check fails, and one-way authentication performed by the first network corresponding to the core network device on the first terminal fails.

If the one-way authentication performed by the first terminal on the first network succeeds, and the one-way authentication performed by the first network on the first terminal succeeds, the two-way authentication between the first network and the first terminal succeeds.

In the procedures corresponding to the authentication modes, a parameter (for example, the random number, the first random number, the check value, the ciphertext information, the second check value, or the second ciphertext information) sent by the first terminal to the core network device to perform authentication may be carried in a first message. The first message may be a registration request message, an access request message, a request message for the access network device, or a request message for registration with a network. A name of the first message is not limited in this application. The first message may be a non-access stratum (non-access stratum, NAS) message or a non-NAS message.

For a scenario in which the authentication mode for the first terminal obtained by the core network device is no authentication performed:
In a possible implementation, the core network device does not need to perform an authentication procedure, or the core network device skips an authentication procedure for the first terminal.

In another possible implementation, the core network device may further make a further decision based on a location of the first terminal, to determine a final authentication mode for the first terminal.

For example, when the core network device determines that the location of the first terminal falls within a preset location range, the core network device allows the requester or the first network corresponding to the core network device not to perform the authentication procedure for the first terminal, or allows the requester or the first network corresponding to the core network device to skip the authentication procedure for the first terminal. It may be understood that when the core network device determines that the location of the first terminal falls within the preset location range, the authentication mode corresponding to the first terminal is finally determined as no authentication performed.

For example, when the core network device determines that the location of the first terminal is outside a preset location range or the location of the first terminal does not fall within a preset range, the core network device performs a procedure corresponding to a configured authentication mode, where the configured authentication mode is used to authenticate a terminal that accesses a network in which the core network device is located. Further, the configured authentication mode is used to authenticate a first-type terminal that accesses the network in which the core network device is located. The first-type terminal may include an internet of things terminal, a passive internet of things terminal, a semi-passive internet of things terminal, a semi-active internet of things terminal, an active internet of things terminal, or the like. It may be understood that when the core network device determines that the location of the first terminal is outside the preset location range, the authentication mode corresponding to the first terminal is finally determined as the configured authentication mode. The configured authentication mode may be configured in the core network device, or may be configured in the another core network device. The core network device may obtain the configured authentication mode from the another core network device.

The configured authentication mode may be one-way authentication performed by the first terminal on the requester, one-way authentication performed by the requester on the first terminal, two-way authentication between the first terminal and the requester, one-way authentication performed by the first terminal on the first network corresponding to the core network device, one-way authentication performed by the first network corresponding to the core network device on the first terminal, two-way authentication between the first terminal and the first network corresponding to the core network device, or another authentication mode.

In an optional example, the location of the first terminal may be represented by using a geographical location. For example, the geographical location is longitude and latitude, or a coordinate value. The location of the first terminal includes but is not limited to one or more of the following: a geographical location of the first terminal, and a geographical location of a second terminal that performs random access on the first terminal.

The preset location range may be a preset geographical location range. The preset geographical location range may be a set of one or more geographical locations.

Determining that the location of the first terminal falls within the preset location range may be specifically: determining that the geographical location representing the location of the first terminal falls within the preset geographical location range. Determining that the location of the first terminal is outside the preset location range may be specifically: determining that the geographical location representing the location of the first terminal is outside the preset geographical location range.

In an optional example, the location of the first terminal may be represented by a first identifier (which may be understood as that the location of the first terminal is represented by using the first identifier). For example, the first identifier includes but is not limited to one or more of the following: an identifier of an access network device accessed by the first terminal, an identifier (cell ID) of a cell (cell) in which the first terminal is located, an identifier (TAI) of a tracking area (tracking area, TA) in which the first terminal is located, an identifier of a network accessed by the first terminal, an identifier of a slice accessed by the first terminal, an identifier (CAG ID) of a closed access group (closed access group, CAG) accessed by the first terminal, an identifier of an access network device accessed by a second terminal, an identifier of a cell in which the second terminal is located, an identifier of a tracking area in which the second terminal is located, an identifier of a network accessed by the second terminal, an identifier of a slice accessed by the first terminal, and an identifier of a closed access group accessed by the second terminal. The second terminal is a terminal that performs random access on the first terminal.

The identifier of the access network may be an ID (for example, a radio access network global number RAN global ID or a gNodeB ID), address information, port information, or domain name information. The identifier of the accessed network may be a public land mobile network (public land mobile network, PLMN) identifier, or may be a non-public network identifier, for example, a combination of a PLMN ID and a network identifier (network identifier, NID). For example, the public land mobile network (public land mobile network, PLMN) identifier may be a combination of a mobile country code (mobile country code, MCC) and a mobile network code (mobile network code, MNC).

The preset location range may be a preset identifier range. The preset identifier range may be a set of one or more identifiers.

Determining that the location of the first terminal falls within the preset location range may be specifically: determining that the first identifier representing the location of the first terminal falls within the preset identifier range. Determining that the location of the first terminal is outside the preset location range may be specifically: determining that the first identifier representing the location of the first terminal is outside the preset identifier range or falls outside the preset identifier range.

In an optional example, the location of the first terminal may be represented by using a geographical location and a first identifier. For specific details, refer to the foregoing descriptions. Details are not described again.

In a possible implementation, based on the foregoing example, after receiving the first information from the requester, the core network device may further obtain the identifier of the first terminal, and send the obtained identifier of the first terminal to the requester. For example, that the core network device obtains the identifier of the first terminal includes: The core network device receives the identifier of the first terminal that is sent by the first terminal.

For example, after receiving the first information, the core network device indicates the access network device to perform a random access process of the first terminal. After the access network device performs the random access process of the first terminal, the first terminal sends the identifier of the first terminal to the core network device via the access network device. The identifier of the first terminal may be carried in a second message. The second message may be a registration request message, an access message, an access request message, a request message for network access, or a request message for registration with a network. A name of the second message is not limited in this application. The second message may be a NAS message or a non-NAS message. The first message may be the same as or different from the second message. In the current technology, an identifier of the terminal device may be carried in a registration request message. In this embodiment of this application, a message carrying the identifier of the terminal device is extended and no longer limited to a registration request message. In addition, when the first message is the same as the second message, the first terminal may not need to send, to the core network device by using an independent message, the parameter used to perform authentication (for example, the random number, the first random number, the check value, or the second check value), so that signaling exchange can be reduced.

A sequence of step 202, step 203, and obtaining of the identifier of the first terminal by the core network device is not limited. If the core network device obtains the identifier of the first terminal and sends the identifier of the first terminal to the requester after performing the authentication procedure and determining that the authentication succeeds, the security can be improved.

The following describes an example of a sequence of information exchange in each authentication procedure and the core network device obtaining the identifier of the first terminal and sending the obtained identifier of the first terminal to the requester.

When the authentication mode corresponding to the first terminal is one-way authentication performed by the first terminal on the requester (referring to FIG. 3a), the identifier of the first terminal and the random number that are sent by the first terminal to the core network device may be sent to the core network device in one message, or may be sent to the core network device in different messages. If the first terminal sends the identifier of the first terminal to the core network device after the one-way authentication performed by the first terminal on the requester succeeds (that is, the first terminal successfully checks the check value or the ciphertext information based on the random number), the security can be further improved. In addition, the identifier of the first terminal and the random number that are sent by the core network device to the requester may be sent to the requester in one message, or may be sent to the requester in different messages.

When the authentication mode corresponding to the first terminal is one-way authentication performed by the requester on the first terminal (referring to FIG. 3b), the identifier of the first terminal and the check value (or the ciphertext information) that are sent by the first terminal to the core network device may be sent to the core network device in one message, or may be sent to the core network device in different messages. In addition, the identifier of the first terminal and the check value (or the ciphertext information) that are sent by the core network device to the requester may be sent to the requester in one message, or may be sent to the requester in different messages. If the first terminal sends the identifier of the first terminal to the core network device after the one-way authentication performed by the requester on the first terminal succeeds (that is, the requester successfully checks the check value (or the ciphertext information) based on the random number), the security can be further improved. In addition, when the random number is sent to the first terminal, the access network device may send the random number to the first terminal when the access network device performs the random access process of the first terminal, or the access network device may send the random number to the first terminal after determining that random access of the first terminal succeeds.

When the authentication mode corresponding to the first terminal is two-way authentication between the first terminal and the requester (referring to FIG. 3c), the identifier of the first terminal and the first random number that are sent by the first terminal to the core network device may be sent to the core network device in one message, or may be sent to the core network device in different messages. In addition, the identifier of the first terminal and the second check value (or the second ciphertext information) that are sent by the first terminal to the core network device may be sent to the core network device in one message, or may be sent to the core network device in different messages. The first terminal sends the identifier of the first terminal to the core network device after successfully checking the first check value (or the second ciphertext information) based on the first random number, so that the security can be further improved. In addition, the identifier of the first terminal and the first random number that are sent by the core network device to the requester may be sent to the requester in one message, or may be sent to the requester in different messages. In addition, the identifier of the first terminal and the second check value (or the second ciphertext information) that are sent by the core network device to the requester may be sent to the requester in one message, or may be sent to the requester in different messages.

When the authentication mode corresponding to the first terminal is one-way authentication performed by the first terminal on the first network corresponding to the core network device (referring to FIG. 3d), the identifier of the first terminal and the first random number that are sent by the first terminal to the core network device may be sent to the core network device in one message, or may be sent to the core network device in different messages. The first terminal sends the identifier of the first terminal to the core network device after the one-way authentication performed by the first terminal on the first network corresponding to the core network device succeeds (that is, the first terminal successfully checks the check value ciphertext information based on the first random number), so that the security can be further improved.

When the authentication mode corresponding to the first terminal is one-way authentication performed by the first network corresponding to the core network device on the first terminal (referring to FIG. 3e), the check value (or the ciphertext information) and the identifier of the first terminal that are sent by the first terminal to the core network device may be sent to the core network device in one message, or may be sent to the core network device in different messages. The first terminal sends the identifier of the first terminal to the core network device after the first network corresponding to the core network device performs one-way authentication on the first terminal (that is, the core network device successfully checks the check value or the ciphertext information based on the random number), so that the security can be further improved. In addition, sending the random number to the first terminal may be: The access network device sends the random number to the first terminal when the access network device performs the random access process of the first terminal. Alternatively, the access network device sends the random number to the first terminal after determining that the first terminal successfully performs random access.

When the authentication mode corresponding to the first terminal is two-way authentication between the first terminal and the first network corresponding to the core network device (referring to FIG. 3f), the first random number and the identifier of the first terminal that are sent by the first terminal to the core network device may be sent to the core network device in one message, or may be sent to the core network device in different messages. In addition, the second check value (or the second ciphertext information) and the identifier of the first terminal that are sent by the first terminal to the core network device may be sent to the core network device in one message, or may be sent to the core network device in different messages. The first terminal sends the identifier of the first terminal to the core network device after successfully checking the first check value or the first ciphertext information based on the first random number, so that the security can be further improved.

In a possible implementation, when the first operation is one or more of the read operation, the write operation, the delete operation, the encryption operation, the access operation, the block write operation, the block erase operation, the kill operation, or the like, after the core network device obtains the identifier of the first terminal, performs the procedure corresponding to the authentication mode corresponding to the first terminal, and determines that the authentication succeeds, the core network device may further perform the first operation on the first terminal.

For the first terminal, an authentication mode may be preconfigured in the first terminal, or no authentication mode may be configured in the first terminal. When no authentication mode is configured in the first terminal, after the core network device obtains the authentication mode corresponding to the first terminal, the core network device may send information about the authentication mode to the first terminal, where the information about the authentication mode indicates the authentication mode corresponding to the first terminal. Certainly, when an authentication mode is preconfigured in the first terminal, the core network device may also send information about the authentication mode to the first terminal. After learning the authentication mode corresponding to the first terminal, the first terminal may perform the authentication procedure corresponding to the authentication mode.

In a possible implementation, the information about the authentication mode may explicitly indicate the authentication mode corresponding to the first terminal. For example, the authentication mode corresponding to the first terminal is indicated by using a bit value. For example, the authentication mode corresponding to the first terminal is indicated by using a value of three bits or even more bits. For example, a value 000 of the three bits indicates no authentication performed. A value 001 of the three bits indicates two-way authentication between the first terminal and the requester. A value 010 of the three bits indicates two-way authentication between the first terminal and the first network corresponding to the core network device. A value 011 of the three bits indicates one-way authentication performed by the requester on the first terminal. A value 100 of the three bits indicates one-way authentication performed by the first terminal on the requester. A value 101 of the three bits indicates one-way authentication performed by the first network corresponding to the core network device on the first terminal. A value 110 of the three bits indicates one-way authentication performed by the first terminal on the first network corresponding to the core network device. The meanings indicated by the bit values are merely examples, and should not constitute a limitation on the solution.

In a possible implementation, when no authentication mode is configured in the first terminal, and the core network device does not send the information about the authentication mode to the first terminal, it may indicate that authentication is not performed.

In a possible implementation, the information about the authentication mode may be a random number, indicating that the authentication mode is one-way authentication performed by the requester on the first terminal or one-way authentication performed by the first network corresponding to the core network device on the first terminal. In an authentication process, the first terminal obtains a check value or ciphertext information based on the random number, and sends the check value or the ciphertext information to the core network device.

For example, a process in which the core network device sends the information about the authentication mode to the first terminal includes: The core network device first sends the information about the authentication mode corresponding to the first terminal to the access network device. The access network device sends the information about the authentication mode to the first terminal in the process in which the access network device performs random access on the first terminal or after the first terminal successfully performs random access. In a possible implementation, the access network device may broadcast the information about the authentication mode.

The following describes a specific communication procedure with reference to a specific scenario.

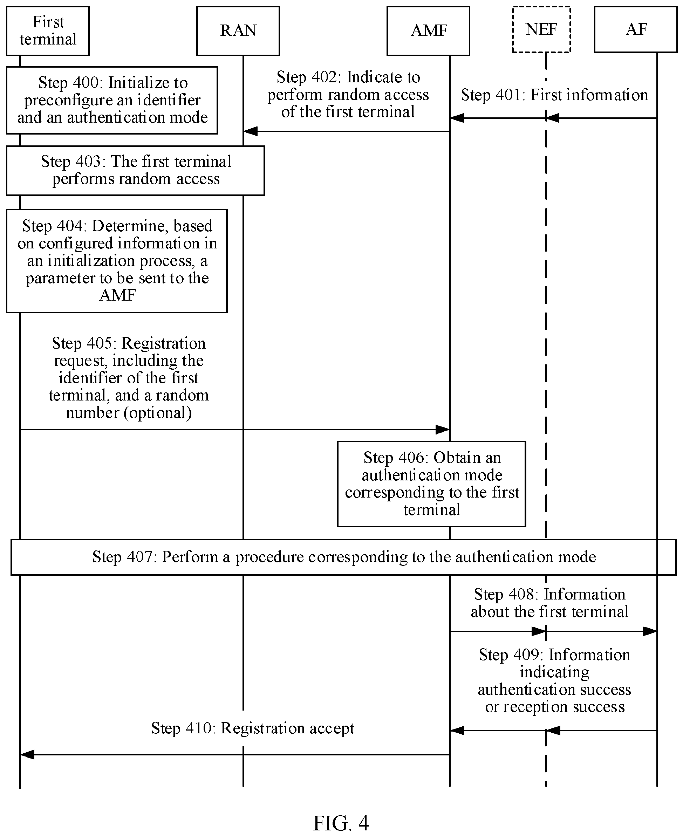

As shown in FIG. 4, a diagram of a specific communication procedure is described. The communication procedure is applicable to a scenario in which an authentication mode is preconfigured in a first terminal, and authentication is performed between the first terminal and a requester. In this example, an example in which an access network device is a RAN, a core network device is an AMF, and the requester is an AF is used for description. The AMF may directly communicate with the AF, or may communicate with the AF via another core network device (for example, an NEF, an SMF, or a UPF).

Step 400: Initialize the first terminal.

An initialization process may be understood as that an enterprise or a user (the requester) performs printing on the first terminal (preconfigures or writes initial data).

The initialization process includes: configuring (or writing) an identifier of the first terminal and an authentication mode corresponding to the first terminal in the first terminal.

The authentication mode corresponding to the first terminal may be two-way authentication between the first terminal and the AF, one-way authentication performed by the AF on the first terminal, one-way authentication performed by the first terminal on the AF, or no authentication performed. In a possible implementation, the authentication mode is implemented by setting a flag bit in the first terminal. For example, a flag bit of two or more bits is set. For example, 00 indicates no authentication performed, 01 indicates one-way authentication performed by the first terminal on the AF, 10 indicates one-way authentication performed by the AF on the first terminal, and 11 indicates two-way authentication between the first terminal and the AF. The meanings indicated by the bit values are merely examples, and should not constitute a limitation on the solution. In a possible implementation, when the enterprise or the user deploys an authentication server (for example, an AAA server) to perform authentication, two-way authentication between the first terminal and the AF may be understood as two-way authentication between the first terminal and the AAA server, one-way authentication performed by the AF on the first terminal may be understood as one-way authentication performed by the AAA server on the first terminal, and one-way authentication performed by the first terminal on the AF may be understood as one-way authentication performed by the first terminal on the AAA server. The AF may be configured to forward a message exchanged between the AAA server and another network element/device, or serve as a proxy of the AAA server. How the AF interacts with the AAA server is not limited in this application.

The initialization process may further include: configuring (or writing) one or more of the following in the first terminal: a security key, a random number, a security algorithm, a NAS security policy, and an AS security policy. The authentication mode corresponding to the first terminal, the security key, the random number, the security algorithm, the NAS security policy, the AS security policy, and the like may be considered as security parameters. The NAS security policy may include encryption protection and/or integrity protection. The AS security policy may include encryption protection and/or integrity protection. The random number may be used as a parameter for authentication in an authentication procedure. For example, the first terminal sends the random number during one-way authentication performed by the first terminal on the AF or during two-way authentication between the first terminal and the AF. The security key may be used to obtain a check value or ciphertext information when a procedure corresponding to security authentication is performed. Alternatively, the security key is used to decrypt a check value or ciphertext information to obtain plaintext information (for example, the random number). The NAS security policy may be used to determine whether encryption and/or integrity protection needs to be performed at a NAS stratum. The AS security policy may be used to determine whether encryption and/or integrity protection needs to be performed at an AS stratum.

In addition, it should be noted that the first terminal may update preconfigured information, for example, update the preconfigured authentication mode.

Step 401: The AF sends first information to the AMF, where the first information indicates the first terminal.

Correspondingly, the AMF receives the first information from the AF.

The first information may indicate the first terminal in one or more manners. For details, refer to the descriptions of step 201. Details are not described again.

In a possible implementation, the first information may indicate to perform a first operation on the first terminal. For example, the first information includes information about the first operation, and the first operation is indicated by using the information about the first operation. Further, optionally, the first information further includes an operation parameter corresponding to the first operation. For specific details, refer to the descriptions of step 201. Details are not described again.

In a possible implementation, the AF indicates the authentication mode corresponding to the first terminal to the AMF. For example, the AF indicates the authentication mode corresponding to the first terminal to the AMF by using the first information. Specifically, the first information further indicates the authentication mode corresponding to the first terminal. Certainly, the AF may alternatively indicate the authentication mode corresponding to the first terminal to the AMF by using other information different from the first information. In this example, the authentication mode that corresponds to the first terminal and that is indicated by the AF to the AMF is the same as the authentication mode preconfigured in the first terminal in the initialization process in step 400. The authentication mode corresponding to the first terminal is two-way authentication between the first terminal and the AF, one-way authentication performed by the AF on the first terminal, one-way authentication performed by the first terminal on the AF, or no authentication performed.

In a possible implementation, the AF may further send the random number to the AMF, where the random number is used as the parameter for authentication in the authentication procedure. For example, the AF sends the random number to the first terminal via the AMF during one-way authentication performed by the AF on the first terminal. For example, the first information includes the random number.

In a specific example, the AF sends the security policy for the first terminal to the AMF, where the security policy for the first terminal includes the authentication mode corresponding to the first terminal and/or the random number. The security policy may be included in the first information, or other information different from the first information.

Step 402: The AMF indicates the RAN to perform a random access process of the first terminal.

The AMF may interact with the RAN by using an N2 message.

Step 403: The RAN performs the random access process of the first terminal based on an indication of the AMF.

For example, the RAN initiates random access signaling to the first terminal, and the first terminal performs random access.

Step 404: After the first terminal successfully performs random access, the first terminal determines, based on the configured information in the initialization process, parameter information to be sent to the AMF.

For example, a process in which the first terminal determines, based on the configured information in the initialization process, the parameter information to be sent to the AMF includes: The first terminal determines, based on the preconfigured authentication mode, whether to send the random number to the AMF. For example, when the authentication mode is one-way authentication performed by the first terminal on the AF or two-way authentication between the first terminal and the AF, the first terminal needs to send the random number to the AMF. For example, when the authentication mode is one-way authentication performed by the AF on the first terminal or no authentication performed, the first terminal does not need to send the random number to the AMF. The random number sent by the first terminal to the AMF may be randomly generated by the first terminal, or may be preconfigured in the first terminal.

Step 405: After the first terminal successfully performs random access, the first terminal sends a registration request message to the AMF via the RAN, where the registration request message includes an identifier of the first terminal.

Correspondingly, the AMF receives the registration request message from the first terminal.

If the first terminal needs to send the random number to the AMF, in a possible implementation, the registration request message further includes the random number.

It may be understood that the registration request message may alternatively be an access message, an access request message, a request message for network access, or a request message for registration with a network. A name of the message is not limited in this application.

In addition, it may be understood that the identifier of the first terminal and the random number may alternatively be sent to the AMF in different messages. Herein, only an example in which the identifier of the first terminal and the random number are sent to the AMF in a same registration request message is used for description.

Step 406: The AMF obtains the authentication mode corresponding to the first terminal.

For a process in which the AMF obtains the authentication mode corresponding to the first terminal, refer to the process in which the core network device obtains the authentication mode corresponding to the first terminal described in step 202. Details are not described again.

In a scenario in which the authentication mode for the first terminal that is obtained by the AMF is no authentication performed, in a possible implementation, the AMF does not need to perform a procedure corresponding to the authentication mode. In another possible implementation, the AMF may further perform further determining based on a location of the first terminal, to determine a final authentication mode for the first terminal. For a process in which the AMF performs further determining based on the location of the first terminal, to determine the final authentication mode for the first terminal, refer to the foregoing process in which the core network device makes the further decision based on the location of the first terminal, to determine the final authentication mode for the first terminal. Details are not described again.

A sequence of step 405 and step 406 is not limited.

Step 407: When authentication is required, the AMF performs a procedure corresponding to the authentication mode corresponding to the first terminal.

A message exchanged between the AF and the first terminal may be transmitted via the RAN and/or the core network device.

For example, for a procedure of one-way authentication performed by the first terminal on the AF, refer to the descriptions of FIG. 3a. For a procedure of one-way authentication performed by the AF on the first terminal, refer to the descriptions of FIG. 3b. For a procedure of two-way authentication between the first terminal and the AF, refer to the descriptions of FIG. 3c.

A sequence of step 405 and step 407 is not limited.

Step 408: The AMF sends information about the first terminal to the AF.

When the authentication mode corresponding to the first terminal is no authentication performed, the information about the first terminal includes the identifier of the first terminal.

When the authentication mode corresponding to the first terminal is one-way authentication performed by the first terminal on the AF (referring to the authentication procedure described in FIG. 3a), the information about the first terminal includes the identifier of the first terminal and/or the random number.

When the authentication mode corresponding to the first terminal is one-way authentication performed by the AF on the first terminal (referring to the authentication procedure described in FIG. 3b), the information about the first terminal includes one or more of the following: the identifier of the first terminal, the random number, and the check value (or the ciphertext information).

When the authentication mode corresponding to the first terminal is two-way authentication between the first terminal and the AF (referring to the authentication procedure described in FIG. 3c), the information about the first terminal includes one or more of the following: the identifier of the first terminal, a first random number, and a second check value (or second ciphertext information).

A sequence of step 408, step 406, and step 407 is not limited.

Step 409: The AF sends, to the AMF, information indicating authentication success and/or information indicating reception success.

Correspondingly, the AMF receives, from the AF, the information indicating authentication success or the information indicating reception success.

The reception success indicates that the information about the first terminal is successfully received.

When the authentication mode corresponding to the first terminal is no authentication performed, the information about the first terminal includes the identifier of the first terminal. In other words, after receiving the identifier of the first terminal, the AF feeds back, to the AMF, the information indicating reception success.

When the authentication mode corresponding to the first terminal is one-way authentication performed by the first terminal on the AF (referring to the authentication procedure described in FIG. 3a), the information about the first terminal includes the identifier of the first terminal and/or the random number. After receiving the identifier of the first terminal, AF may send, to the AMF, the information indicating reception success. Alternatively, after receiving the identifier of the first terminal and the random number, the AF sends, to the AMF, the information indicating reception success. Optionally, the information indicating reception success includes the check value (or the ciphertext information) obtained by the AF based on the random number.

When the authentication mode corresponding to the first terminal is one-way authentication performed by the AF on the first terminal (referring to the authentication procedure described in FIG. 3b), the information about the first terminal includes one or more of the following: the identifier of the first terminal, the random number, and the check value (or the ciphertext information). After receiving the information about the first terminal, the AF sends, to the AMF, the information indicating reception success. Alternatively, after successfully checking the check value (or the ciphertext information) based on the random number, the AF sends, to the AMF, the information indicating authentication success. The information indicating reception success and the information indicating authentication success may be sent to the AMF in one message, or may be sent to the AMF in different messages.

When the authentication mode corresponding to the first terminal is two-way authentication between the first terminal and the AF (referring to the authentication procedure described in FIG. 3c), the information about the first terminal includes one or more of the following: the identifier of the first terminal, the first random number, and the second check value (or the ciphertext information). After receiving the information about the first terminal, the AF sends, to the AMF, the information indicating reception success. Alternatively, after successfully checking the second check value (or the second ciphertext information), the AF sends, to the AMF, the information indicating authentication success. The information indicating reception success and the information indicating authentication success may be sent to the AMF in one message, or may be sent to the AMF in different messages.

Step 410: The AMF sends a registration accept message to the first terminal.

Correspondingly, the first terminal receives the registration accept message for the first terminal from the AMF.

It may be understood that the registration accept message means access success of the first terminal. The registration accept message may alternatively be indication information indicating access success of the first terminal, an access success message, a response message for successful network access, or a response message for successful registration with the network. A name of the message is not limited in this application.

In a possible implementation, the AMF sends the registration accept message to the first terminal after receiving information indicating authentication success from the first terminal. This manner may be applicable to a scenario in which the authentication mode is one-way authentication performed by the first terminal on the requester.

In a possible implementation, the AMF sends the registration accept message to the first terminal after receiving the information indicating reception success from the AF. This manner may be applicable to a scenario of one-way authentication performed by the first terminal on the requester.

In a possible implementation, the AMF sends the registration accept message to the first terminal after receiving the information indicating authentication success from the AF. This manner may be applicable to a scenario of one-way authentication performed by the requester on the first terminal, or a scenario of two-way authentication between the first terminal and the requester.

In a possible implementation, when the authentication mode corresponding to the first terminal is no authentication performed, after receiving the registration request message sent by the first terminal (referring to step 405), the AMF may skip step 407, step 408, and step 409, and directly perform step 410. When the AMF determines that the authentication procedure does not need to be performed, the AMF immediately feeds back the registration accept message to the first terminal after receiving the registration request message, so that the first terminal can quickly access a core network, reducing signaling exchange and latency overheads, improving inventory taking efficiency of the first terminal, and reducing power consumption overheads of the first terminal.

In a possible implementation, when the authentication mode corresponding to the first terminal is no authentication performed, after receiving the registration request message sent by the first terminal (referring to step 405), the AMF may skip step 407, step 408, step 409, and step 410. When the AMF determines that the authentication procedure does not need to be performed, the AMF does not need to send a message to the first terminal after receiving the registration request message. After forwarding the message in step 405 to the AMF, the access network device may continue to perform a random access procedure of a next terminal. Alternatively, after receiving the registration request message, the AMF may indicate the access network device to perform a random access procedure of a next terminal, and does not need to send a message to the first terminal.

In a scenario in which no authentication mode is configured in a first terminal, and authentication is performed between the first terminal and a requester, a specific communication procedure has many similarities with the communication procedure described in FIG. 4. A difference between the specific communication procedure and the communication procedure described in FIG. 4 includes:
An initialization process (referring to the descriptions of step 400) does not include configuring an authentication mode in the first terminal.

An authentication mode that corresponds to the first terminal and that is indicated by an AF to an AMF does not need to be the same as the authentication mode preconfigured in the first terminal in the initialization process. The AF may indicate the authentication mode corresponding to the first terminal to the AMF as required or dynamically. For a same terminal, the AF may indicate a same or different authentication modes at different time.

After the first terminal successfully performs random access (referring to step 404), the first terminal cannot determine, based on the authentication mode, whether to send a random number to the AMF. In an alternative manner, the first terminal determines to send the random number to the AMF if the random number is preconfigured in the first terminal; or does not send the random number to the AMF if the random number is not configured. In another alternative manner, the AMF or a RAN indicates, to the first terminal, whether the random number needs to be sent. For example, the AMF or the RAN sends information about the authentication mode corresponding to the first terminal to the first terminal, and the first terminal may determine, by using the information about the authentication mode for the first terminal, the authentication mode corresponding to the first terminal, to determine whether to send the random number. For example, when the authentication mode is one-way authentication performed by the first terminal on the AF or two-way authentication between the first terminal and the AF, the first terminal needs to send the random number. For example, when the authentication mode is one-way authentication performed by the AF on the first terminal or no authentication performed, the first terminal does not need to send the random number. The random number sent by the first terminal may be randomly generated by the first terminal, or may be preconfigured in the first terminal.

For another process, refer to the descriptions of FIG. 4. Details are not described again.

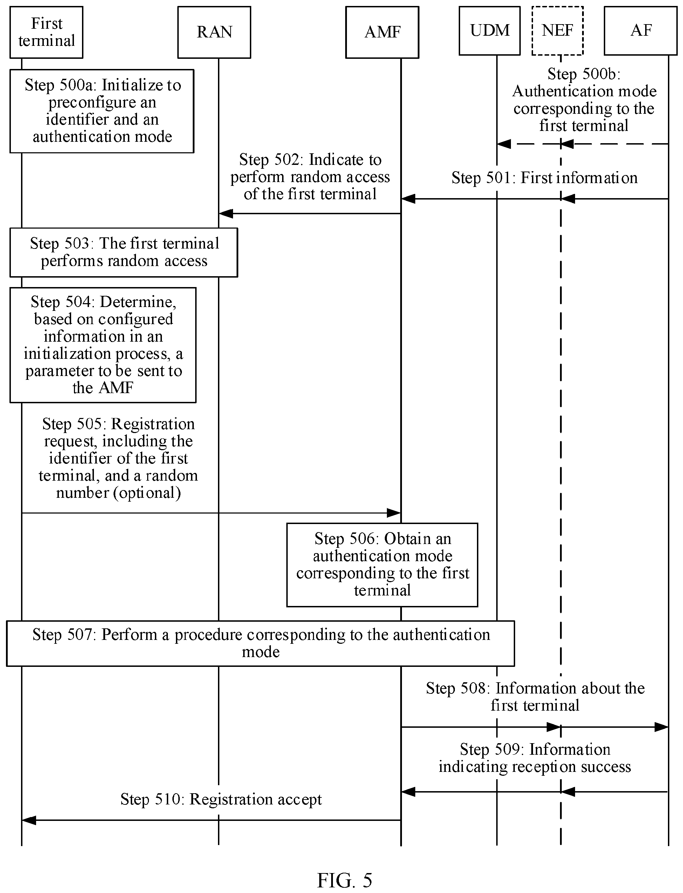

As shown in FIG. 5, a diagram of a specific communication procedure is described. The communication procedure is applicable to a scenario in which an authentication mode is preconfigured in a first terminal, and authentication is performed between the first terminal and a first network corresponding to a core network device. In this example, an example in which an access network device is a RAN, the core network device is an AMF, and a requester is an AF is used for description. The AMF may directly communicate with the AF, or may communicate with the AF via another core network device (for example, an NEF, an SMF, or a UPF). The AMF may directly communicate with a UDM, or may communicate with a UDM via the another core network device (for example, the NEF, the SMF, or the UPF).

Step 500a: Initialize the first terminal.

An initialization process may be understood as that an enterprise or a user (the requester) performs printing on the first terminal (preconfigures or writes initial data).

The initialization process includes: configuring (or writing) an identifier of the first terminal and an authentication mode corresponding to the first terminal in the first terminal.

The authentication mode corresponding to the first terminal may be two-way authentication between the first terminal and the first network, one-way authentication performed by the first network on the first terminal, one-way authentication performed by the first terminal on the first network, or no authentication performed. In a possible implementation, the authentication mode is implemented by setting a flag bit in the first terminal. For example, a flag bit of two or more bits is set. For example, 00 indicates no authentication performed, 01 indicates one-way authentication performed by the first terminal on the first network, 10 indicates one-way authentication performed by the first network on the first terminal, and 11 indicates two-way authentication between the first terminal and the first network. The meanings indicated by the bit values are merely examples, and should not constitute a limitation on the solution.

The initialization process may further include: configuring (or writing) one or more of the following in the first terminal: a security key, a random number, a security algorithm, a NAS security policy, and an AS security policy. The authentication mode corresponding to the first terminal, the security key, the random number, the security algorithm, the NAS security policy, the AS security policy, and the like may be considered as security parameters. The NAS security policy may include encryption protection and/or integrity protection. The AS security policy may include encryption protection and/or integrity protection. The random number may be used as a parameter for authentication in an authentication procedure when the authentication mode corresponding to the first terminal is performed. For example, the first terminal sends the random number to the AMF during one-way authentication performed by the first terminal on the first network or during two-way authentication between the first terminal and the first network. The security key may be used to obtain a check value or ciphertext information when a procedure corresponding to security authentication is performed. Alternatively, the security key is used to decrypt a check value or ciphertext information to obtain plaintext information (for example, the random number). The NAS security policy may be used to determine whether encryption and/or integrity protection needs to be performed at a NAS stratum. The AS security policy may be used to determine whether encryption and/or integrity protection needs to be performed at an AS stratum.

In addition, it should be noted that the first terminal may update preconfigured information, for example, update the preconfigured authentication mode.

Step 500b: The AF indicates the authentication mode corresponding to the first terminal to the UDM.

The authentication mode that corresponds to the first terminal and that is indicated by the AF to the UDM does not need to be the same as the authentication mode preconfigured in the first terminal in the initialization process, for example, two-way authentication between the first terminal and the first network, one-way authentication performed by the first network on the first terminal, one-way authentication performed by the first terminal on the first network, or no authentication performed.

In a possible implementation, that the AF indicates the authentication mode corresponding to the first terminal to the UDM includes: The AF sends the identifier of the first terminal and the authentication mode corresponding to the first terminal to the UDM.

In another possible implementation, that the AF indicates the authentication mode corresponding to the first terminal to the UDM includes: The AF sends a terminal identifier range and an authentication mode corresponding to the terminal identifier range to the UDM, where the terminal identifier range includes the identifier of the first terminal. For example, the authentication mode corresponding to the terminal identifier range may be understood as that for any terminal whose identifier falls within the terminal identifier range, an authentication mode corresponding to the terminal is the authentication mode corresponding to the terminal identifier range.

In another possible implementation, that the AF indicates the authentication mode corresponding to the first terminal to the UDM includes: The AF sends information about the AF and the authentication mode to the UDM, where the information about the AF may indicate a terminal identifier range or an identifier of one or more terminals corresponding to (or managed by) the AF. The terminal identifier range or the identifier of the one or more terminals corresponding to (or managed by) the AF include the identifier of the first terminal. For the information about the AF, refer to the foregoing descriptions. Details are not described again.

When the AF indicates the authentication mode corresponding to the first terminal to the UDM, the authentication mode may be indicated by using a value of two or more bits. For example, 00 indicates no authentication performed, 01 indicates one-way authentication performed by the first terminal on the first network, 10 indicates one-way authentication performed by the first network on the first terminal, and 11 indicates two-way authentication between the first terminal and the first network. The meanings indicated by the bit values are merely examples, and should not constitute a limitation on the solution. In a possible implementation, when the AF does not indicate the authentication mode corresponding to the first terminal to the UDM, it may be understood that the authentication mode corresponding to the first terminal is no authentication performed.

Further, optionally, the AF further sends one or more of the following to the UDM: the random number and the security key. The random number may be used as the parameter for authentication in the authentication procedure. For example, the core network device needs to send the random number to the first terminal during one-way authentication performed by the first network on the first terminal. The security key may be used to obtain the check value or the ciphertext information when the procedure corresponding to security authentication is performed. Alternatively, the security key is used to decrypt the check value or the ciphertext information to obtain the plaintext information (for example, the random number).

In a possible implementation, the authentication mode corresponding to the first terminal, and the random number may be included in security policy information corresponding to the first terminal. In other words, the AF sends the security policy information corresponding to the first terminal to the UDM. The security policy information includes the authentication mode corresponding to the first terminal, and/or the random number.

The authentication mode corresponding to the first terminal, the random number, the security key, and the like may be stored in context information of the first terminal, policy information of the first terminal, a service configuration of the first terminal, or subscription data of the first terminal.

If the requester configures, in the core network device, the security policy information corresponding to the first terminal, the core network device may not need to interact with the requester in an access process of the first terminal. This can further reduce signaling overheads, improve access, registration, or communication efficiency of the first terminal, and reduce power consumption overheads of the first terminal.

It may be understood that the AF may directly communicate with the UDM, or may communicate with the UDM via the NEF or another network element.

Step 500b is an optional step, and step 500b may not be performed.

Step 501: The AF sends first information to the AMF, where the first information indicates the first terminal.

Correspondingly, the AMF receives the first information from the AF.

The first information may indicate the first terminal in one or more manners. For details, refer to the descriptions of step 201. Details are not described again.

In a possible implementation, the first information may indicate to perform a first operation on the first terminal. For example, the first information includes information about the first operation, and the first operation is indicated by using the information about the first operation. Further, optionally, the first information further includes an operation parameter corresponding to the first operation. For specific details, refer to the descriptions of step 201. Details are not described again.

In a possible implementation, the AF indicates the authentication mode corresponding to the first terminal to the AMF. This manner may be applicable to a scenario in which step 500b is not performed. For example, the AF indicates the authentication mode corresponding to the first terminal to the AMF by using the first information. Specifically, the first information further indicates the authentication mode corresponding to the first terminal. Certainly, the AF may alternatively indicate the authentication mode corresponding to the first terminal to the AMF by using other information different from the first information. In this example, the authentication mode that corresponds to the first terminal and that is indicated by the AF to the AMF is the same as the authentication mode preconfigured in the first terminal in the initialization process in step 500a. The authenticator corresponding to the first terminal may be two-way authentication between the first terminal and the first network, one-way authentication performed by the first network on the first terminal, one-way authentication performed by the first terminal on the first network, or no authentication performed.

In a possible implementation, the AF may further send the random number to the AMF, where the random number is used as the parameter for authentication in the authentication procedure. For example, the AF sends the random number to the first terminal via the AMF during one-way authentication performed by the first network on the first terminal. For example, the first information includes the random number.

In a specific example, the authentication mode corresponding to the first terminal, and/or the random number are/is included in the security policy corresponding to the first terminal. The security policy may be included in the first information, or other information different from the first information.

In a possible implementation, the AF may further send the security key to the AMF. The security key may be used to obtain the check value or the ciphertext information when the procedure corresponding to security authentication is performed. Alternatively, the security key is used to decrypt the check value or the ciphertext information to obtain the plaintext information (for example, the random number). The security key may be included in the first information, or other information different from the first information.

It may be understood that the AF may directly communicate with the AMF, or may communicate with the AMF via the NEF or the another network element.

Step 502: The AMF indicates the RAN to perform a random access process of the first terminal.

The AMF may interact with the RAN by using an N2 message.

Step 503: The RAN performs the random access process of the first terminal based on an indication of the AMF.

For example, the RAN initiates random access signaling to the first terminal, and the first terminal performs random access.

Step 504: After the first terminal successfully performs random access, the first terminal determines, based on the configured information in the initialization process, parameter information to be sent to the AMF.

For example, a process in which the first terminal determines, based on the configured information in the initialization process, the parameter information to be sent to the AMF includes: The first terminal determines, based on the preconfigured authentication mode, whether to send the random number to the AMF. For example, when the authentication mode is one-way authentication performed by the first terminal on the first network or two-way authentication between the first terminal and the first network, the first terminal needs to send the random number to the AMF. For example, when the authentication mode is one-way authentication performed by the first network on the first terminal or no authentication performed, the first terminal does not need to send the random number to the AMF. The random number sent by the first terminal to the AMF may be randomly generated by the first terminal, or may be preconfigured in the first terminal.

Step 505: After the first terminal successfully performs random access, the first terminal sends a registration request message to the AMF via the RAN, where the registration request message includes the identifier of the first terminal.

Correspondingly, the AMF receives the registration request message from the first terminal.

If the first terminal needs to send the random number to the AMF, in a possible implementation, the registration request message further includes the random number.

It may be understood that the registration request message may alternatively be an access message, an access request message, a request message for network access, or a request message for registration with a network. A name of the message is not limited in this application.

In addition, it may be understood that the identifier of the first terminal and the random number may alternatively be sent to the AMF in different messages. Herein, only an example in which the identifier of the first terminal and the random number are sent to the AMF in a same registration request message is used for description.

Step 506: The AMF obtains the authentication mode corresponding to the first terminal.

For a process in which the AMF obtains the authentication mode corresponding to the first terminal, refer to the process in which the core network device obtains the authentication mode corresponding to the first terminal described in step 202.

In a specific example, if step 500b is performed, and the AF indicates the authentication mode corresponding to the first terminal to the UDM, the AMF may obtain the context information of the first terminal, the policy information of the first terminal, the service configuration of the first terminal, or the subscription data of the first terminal from the UDM based on the identifier of the first terminal or identification information of the AF, and obtain the authentication mode corresponding to the first terminal from the context information of the first terminal or the subscription data of the first terminal. Alternatively, when the AF does not indicate the authentication mode corresponding to the first terminal to the UDM, it may be understood that the authentication mode corresponding to the first terminal is no authentication performed.

In another specific example, if step 500b is not performed, the AMF may obtain, based on an indication of the AF, the authentication mode corresponding to the first terminal. For example, the first information includes the authentication mode corresponding to the first terminal, and the AMF obtains, based on the first information, the authentication mode corresponding to the first terminal. Specifically, the AMF may obtain the authentication mode corresponding to the first terminal from the security policy information that is included in the first information and that corresponds to the first terminal.

In a scenario in which the authentication mode for the first terminal that is obtained by the AMF is no authentication performed, in a possible implementation, the AMF does not need to perform a procedure corresponding to the authentication mode. In another possible implementation, the AMF may perform further determining based on a location of the first terminal, to determine a final authentication mode for the first terminal. For a process in which the AMF performs further determining based on the location of the first terminal, to determine the final authentication mode for the first terminal, refer to the foregoing process in which the core network device makes the further decision based on the location of the first terminal, to determine the final authentication mode for the first terminal. Details are not described again.

A sequence of step 505 and step 506 is not limited.

Step 507: When authentication is required, the AMF performs a procedure corresponding to the authentication mode corresponding to the first terminal.

A message exchanged between the AF and the first terminal may be transmitted via the RAN and/or the core network device.

For example, for a procedure of one-way authentication performed by the first terminal on the first network, refer to the descriptions of FIG. 3d. For a procedure of one-way authentication performed by the first network on the first terminal, refer to the descriptions of FIG. 3e. For a procedure of two-way authentication between the first terminal and the first network, refer to the descriptions of FIG. 3f.

A sequence of step 505 and step 507 is not limited.

Step 508: The AMF sends information about the first terminal to the AF.

A sequence of step 508, step 506, and step 507 is not limited.

When the authentication mode corresponding to the first terminal is no authentication performed, the information about the first terminal includes the identifier of the first terminal.

When the authentication mode corresponding to the first terminal is one-way authentication performed by the first terminal on the first network (referring to the authentication procedure described in FIG. 3d), the information about the first terminal includes the identifier of the first terminal and/or a first random number.

When the authentication mode corresponding to the first terminal is one-way authentication performed by the first network on the first terminal (referring to the authentication procedure described in FIG. 3e), the information about the first terminal includes one or more of the following: the identifier of the first terminal, the random number, and the check value (or the ciphertext information).

When the authentication mode corresponding to the first terminal is two-way authentication between the first terminal and the first network (referring to the authentication procedure described in FIG. 3f), the information about the first terminal includes one or more of the following: the identifier of the first terminal, a first random number, and a second check value (or second ciphertext information).

Step 509: The AF sends, to the AMF, information indicating reception success. Correspondingly, the AMF receives the information indicating reception success from the AF.

The reception success indicates that the information about the first terminal is successfully received.

Step 510: The AMF sends a registration accept message to the first terminal.

Correspondingly, the first terminal receives the registration accept message for the first terminal from the AMF.

It may be understood that the registration accept message means access success of the first terminal. The registration accept message may alternatively be indication information indicating access success of the first terminal, an access success message, a response message for successful network access, or a response message for successful registration with the network. A name of the message is not limited in this application.

In a possible implementation, the AMF sends the registration accept message to the first terminal after receiving information indicating authentication success from the first terminal. This manner may be applicable to a scenario in which the authentication mode is one-way authentication performed by the first terminal on the first network.

In a possible implementation, the AMF sends, to the first terminal after generating the check value (or the ciphertext information) based on the random number, the registration accept message including the check value (or the ciphertext information). This manner may be applicable to a scenario of one-way authentication performed by the first terminal on the first network.

In a possible implementation, the AMF sends the registration accept message to the first terminal after determining that the authentication succeeds. This manner may be applicable to a scenario of one-way authentication performed by the first terminal on the first terminal, or a scenario of two-way authentication between the first terminal and the first terminal.

In an optional example, when the authentication mode corresponding to the first terminal is no authentication performed, after receiving the registration request message sent by the first terminal (referring to step 505), the AMF may skip step 507, step 508, and step 509, and directly perform step 510. When the AMF determines that the authentication procedure does not need to be performed, the AMF immediately feeds back the registration accept message to the first terminal after receiving the registration request message, so that the first terminal can quickly access a core network, reducing signaling exchange and latency overheads, improving inventory taking efficiency of the first terminal, and reducing power consumption overheads of the first terminal.

In an optional example, when the authentication mode corresponding to the first terminal is no authentication performed, after receiving the registration request message sent by the first terminal (referring to step 505), the AMF may skip step 507, step 508, step 509, and step 510. When the AMF determines that the authentication procedure does not need to be performed, the AMF does not need to send a message to the first terminal after receiving the registration request message. After forwarding the message in step 405 to the AMF, the access network device may continue to perform a random access procedure of a next terminal. Alternatively, after receiving the registration request message, the AMF may indicate the access network device to perform a random access procedure of a next terminal, and does not need to send a message to the first terminal.

In a scenario in which no authentication mode is configured in a first terminal, and authentication is performed between the first terminal and a first network, a specific communication procedure has many similarities with the communication procedure described in FIG. 5. A difference between the specific communication procedure and the communication procedure described in FIG. 5 includes:
An initialization process (referring to the descriptions of step 500) does not include configuring an authentication mode in the first terminal.

An authentication mode that corresponds to the first terminal and that is indicated by an AF to an AMF does not need to be the same as an authentication mode preconfigured in the first terminal in the initialization process. The AF may indicate the authentication mode corresponding to the first terminal to the AMF as required or dynamically. For a same terminal, the AF may indicate a same or different authentication modes at different time.

After the first terminal successfully performs random access (referring to step 504), the first terminal cannot determine, based on the authentication mode, whether to send a random number to the AMF. In an alternative manner, the first terminal determines to send the random number to the AMF if the random number is preconfigured in the first terminal; or does not send the random number if the random number is not configured. In another alternative manner, the AMF or a RAN indicates, to the first terminal, whether the random number needs to be sent. For example, the AMF or the RAN sends information about the authentication mode corresponding to the first terminal to the first terminal, and the first terminal may determine, by using the information about the authentication mode for the first terminal, the authentication mode corresponding to the first terminal, to determine whether to send the random number. For example, when the authentication mode is one-way authentication performed by the first terminal on the first network or two-way authentication between the first terminal and the first network, the first terminal needs to send the random number. For example, when the authentication mode is one-way authentication performed by the first network on the first terminal or no authentication performed, the first terminal does not need to send the random number. The random number sent by the first terminal may be randomly generated by the first terminal, or may be preconfigured in the first terminal.

For another process, refer to the descriptions of FIG. 5. Details are not described again.

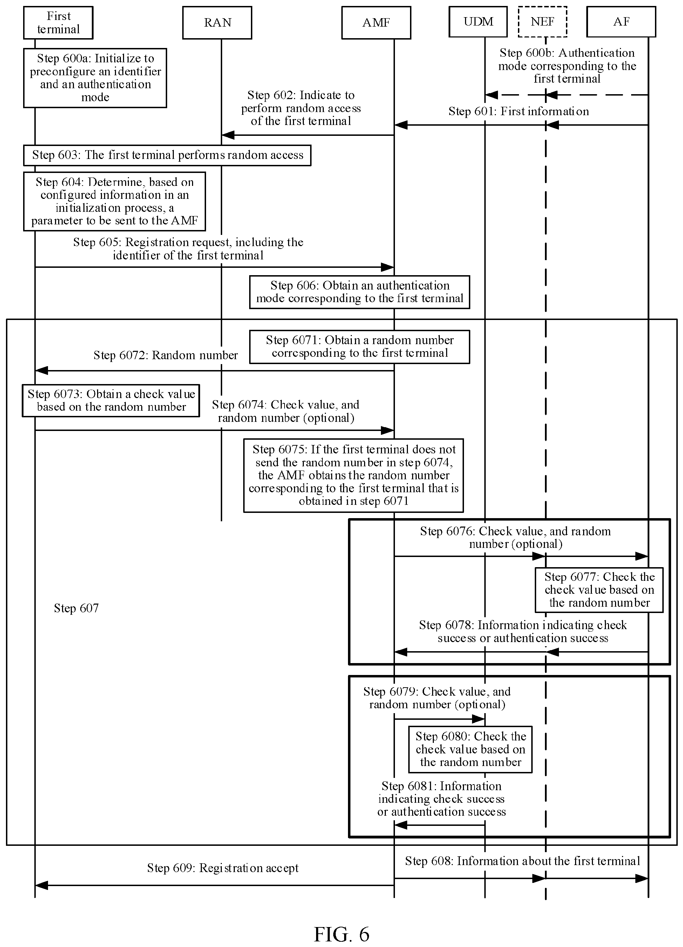

As shown in FIG. 6, a diagram of a specific communication procedure is described. The communication procedure may be applicable to one-way authentication performed by a requester on a first terminal or one-way authentication performed by a first network on a first terminal. An authentication mode may be preconfigured in the first terminal, or no authentication mode may be configured in the first terminal. In this example, an example in which an access network device is a RAN, a core network device is an AMF, and the requester is an AF is used for description. The AMF may directly communicate with the AF, or may communicate with the AF via another core network device (for example, an NEF, an SMF, or a UPF). The AMF may directly communicate with UDM, or may communicate with UDM via the another core network device (for example, the NEF, the SMF, or the UPF).

Step 600a: Initialize the first terminal.

An initialization process may be understood as that an enterprise or a user (the requester) performs printing on the first terminal (preconfigures or writes initial data).

The initialization process includes: configuring (or writing) an identifier of the first terminal in the first terminal.

The initialization process may further include: configuring or writing one or more of the following security parameters in the first terminal: an authentication mode corresponding to the first terminal, a security key, a random number, a security algorithm, a NAS security policy, and an AS security policy.

The authentication mode corresponding to the first terminal may be one-way authentication performed by the AF on the first terminal, or one-way authentication performed by the first network on the first terminal.

The NAS security policy may include encryption protection and/or integrity protection. The AS security policy may include encryption protection and/or integrity protection. The security key may be used to obtain a check value or ciphertext information when a procedure corresponding to security authentication is performed. Alternatively, the security key is used to decrypt a check value or ciphertext information to obtain plaintext information (for example, the random number). The NAS security policy may be used to determine whether encryption and/or integrity protection needs to be performed at a NAS stratum. The AS security policy may be used to determine whether encryption and/or integrity protection needs to be performed at an AS stratum.

In addition, it should be noted that the first terminal may update preconfigured information, for example, update the preconfigured authentication mode.

Step 600b: The AF indicates the authentication mode corresponding to the first terminal to the UDM.

If an authentication mode is preconfigured in the first terminal, the authentication mode that corresponds to the first terminal and that is indicated by the AF to the UDM is the same as the authentication mode preconfigured in the first terminal.

For a process in which the AF indicates the authentication mode corresponding to the first terminal to the UDM, refer to the descriptions of step 500b. A difference includes that in this example, the authentication mode corresponding to the first terminal is one-way authentication performed by the first network or the requester on the first terminal. For other details, refer to step 500b.

Step 600b is an optional step, and step 600b may not be performed.

Step 601: The AF sends first information to the AMF, where the first information indicates the first terminal.

Correspondingly, the AMF receives the first information from the AF.

The first information may indicate the first terminal in one or more manners. For details, refer to the descriptions of step 201. Details are not described again.

In a possible implementation, the first information may indicate to perform a first operation on the first terminal. For example, the first information includes information about the first operation, and the first operation is indicated by using the information about the first operation. Further, optionally, the first information further includes an operation parameter corresponding to the first operation. For specific details, refer to the descriptions of step 201. Details are not described again.

In a possible implementation, the AF indicates the authentication mode corresponding to the first terminal to the AMF. This manner may be applicable to a scenario in which step 600b is not performed. For example, the AF indicates the authentication mode corresponding to the first terminal to the AMF by using the first information. Specifically, the first information further indicates the authentication mode corresponding to the first terminal. Certainly, the AF may alternatively indicate the authentication mode corresponding to the first terminal to the AMF by using other information different from the first information. If the authentication mode is configured in the first terminal in the initialization process in step 600a, the authentication mode that corresponds to the first terminal and that is indicated by the AF to the AMF is the same as the authentication mode preconfigured in the first terminal in the initialization process in step 600a. The authentication mode corresponding to the first terminal is one-way authentication performed by the requester on the first terminal, or one-way authentication performed by the first network on the first terminal.

In a possible implementation, the AF may further send the random number to the AMF, where the random number is used as a parameter for authentication in an authentication procedure. For example, the random number needs to be sent to the first terminal during one-way authentication performed by the first network or the requester on the first terminal. For example, the first information includes the random number.

In a specific example, the authentication mode corresponding to the first terminal, and/or the random number are/is included in a security policy corresponding to the first terminal. The security policy may be included in the first information, or other information different from the first information.

In a possible implementation, the AF may further send the security key to the AMF. The security key may be used to obtain the check value or the ciphertext information when the procedure corresponding to security authentication is performed. Alternatively, the security key is used to decrypt the check value or the ciphertext information to obtain the plaintext information (for example, the random number). The security key may be included in the first information, or other information different from the first information.

It may be understood that the AF may directly communicate with the AMF, or may communicate with the AMF via the NEF or another network element.

Step 602: The AMF indicates the RAN to perform a random access process of the first terminal.

The AMF may interact with the RAN by using an N2 message. In a possible implementation, the AMF may send the random number to the RAN. The random number may be used to perform security authentication.

Step 603: The RAN performs the random access process of the first terminal based on an indication of the AMF. In a possible implementation, if the AMF sends the random number to the RAN, the RAN may broadcast the random number.

For example, the RAN initiates random access signaling to the first terminal, and the first terminal performs random access.

Step 604: After the first terminal successfully performs random access, the first terminal determines, based on the configured information in the initialization process, parameter information to be sent to the AMF.

For example, that the first terminal determines, based on the configured information in the initialization process, the parameter information to be sent to the AMF includes the following plurality processes.

The first terminal determines, based on the preconfigured authentication mode, whether to send the random number to the AMF. For example, when the authentication mode is one-way authentication performed by the first network or the requester on the first terminal, the first terminal does not need to send the random number to the AMF.

Alternatively, the first terminal determines to send the random number to the AMF if the random number is preconfigured in the first terminal; or does not send the random number to the AMF if the random number is not configured.

In another alternative manner, the AMF or the RAN indicates, to the first terminal, whether the random number needs to be sent to the AMF.

Step 605: After the first terminal successfully performs random access, the first terminal sends a registration request message to the AMF via the RAN, where the registration request message includes the identifier of the first terminal.

Correspondingly, the AMF receives the registration request message from the first terminal.

It may be understood that the registration request message may alternatively be an access message, an access request message, a request message for network access, or a request message for registration with a network. A name of the message is not limited in this application.

Step 606: The AMF obtains the authentication mode corresponding to the first terminal, that is, one-way authentication performed by the first network on the first terminal or one-way authentication performed by the requester on the first terminal.

For a process in which the AMF obtains the authentication mode corresponding to the first terminal, refer to the process in which the core network device obtains the authentication mode corresponding to the first terminal described in step 202.

In a specific example, if step 600b is performed, and the AF indicates the authentication mode corresponding to the first terminal to the UDM, the AMF may obtain context information of the first terminal, policy information of the first terminal, a service configuration of the first terminal, or subscription data of the first terminal from the UDM based on the identifier of the first terminal or identification information of the AF, and obtain the authentication mode corresponding to the first terminal from the context information of the first terminal or the subscription data of the first terminal. Alternatively, when the AF does not indicate the authentication mode corresponding to the first terminal to the UDM, it may be understood that the authentication mode corresponding to the first terminal is no authentication performed.

In another specific example, if step 600b is not performed, the AMF may obtain, based on an indication of the AF, the authentication mode corresponding to the first terminal. For example, the first information includes the authentication mode corresponding to the first terminal, and the AMF obtains, based on the first information, the authentication mode corresponding to the first terminal. Specifically, the AMF may obtain the authentication mode corresponding to the first terminal from security policy information that is included in the first information and that corresponds to the first terminal.

A sequence of step 605 and step 606 is not limited.

Step 607: When authentication is required, the AMF performs a procedure corresponding to the authentication mode corresponding to the first terminal.

A message exchanged between the AF and the first terminal may be transmitted via the RAN and/or the core network device.

For a procedure of one-way authentication performed by the AF on the first terminal, refer to the descriptions of FIG. 3b. For a procedure of one-way authentication performed by the first network on the first terminal, refer to the descriptions of FIG. 3e.

A sequence of step 605 and step 607 is not limited.

In a specific implementation, step 607 includes the following steps.

Step 6071: The AMF obtains the random number corresponding to the first terminal.

The AMF obtains the random number in the following several manners.

Manner 1: Receive the random number sent by the AF.

Manner 2: Obtain the random number from first context information, first policy information, a first service configuration, or first subscription data corresponding to the first terminal, where the first context information, the first policy information, the first service configuration, or the first subscription data corresponding to the first terminal is usually stored in the UDM, an AUSF, an NSSAAF, the NEF, a PCF, a TMF, or a UDR.

Manner 3: The AMF generates the random number. For example, when a message sent by the AF to the AMF does not include the random number, the AMF generates the random number. For example, when the first context information, the first policy information, the first service configuration, or the first subscription data corresponding to the first terminal does not include the random number, the AMF generates the random number. For example, the AMF may determine, based on the configured information, to generate the random number.

Step 6072 (same as step 32b1, step 32b2, and step 32e): The AMF sends the random number to the first terminal, and correspondingly, the first terminal receives the random number from the AMF.

In a possible implementation, the random number is carried in a request (for example, authentication request (Authentication Request) or authentication request (Authorization Request)) message sent by the AMF to the first terminal. In another possible implementation, the AMF sends the random number to the RAN, and the RAN broadcasts the random number. For example, step 6072 may be implemented by using step 602 and step 603. In this case, no separate message is needed in step 6072.

Step 6073 (same as step 33b1, step 33b2, and step 33e): The first terminal obtains the check value or the ciphertext information based on the random number.

For example, a process of obtaining the check value or the ciphertext information includes: The first terminal obtains the check value or the ciphertext information based on the random number and a preconfigured key. In a possible implementation, the first terminal may perform an operation on the random number and the preconfigured key, to obtain the check value. In another possible implementation, the first terminal encrypts the random number by using the preconfigured key, to obtain the ciphertext information.

Step 6074 (similar to step 34b1, step 34b2, and step 34e): The first terminal sends the check value or the ciphertext information to the AMF. If the first terminal obtains the random number by using a broadcast message in step 603, the first terminal may include the check value or the ciphertext information from the first terminal in the message in step 605. In other words, step 6074 may be completed by using step 605.

Correspondingly, the AMF receives the check value or the ciphertext information from the first terminal.

In a possible implementation, the check value or the ciphertext information is carried in a response (for example, authentication response (Authentication Response) or authentication response (Authorization Response)) message sent by the first terminal to the AMF. Further, optionally, the first terminal may also send the random number to the AMF when sending the check value or the ciphertext information to the AMF. When the first terminal does not send the random number to the AMF, an eavesdropper may be prevented from listening to the random number for the first terminal through an air interface, which can improve security and reliability.

Step 6075: If the first terminal does not send the random number in step 6074, the AMF obtains the random number corresponding to the first terminal that is obtained in step 6071.

If the authentication mode corresponding to the first terminal is one-way authentication performed by the requester on the first terminal, step 6076 to step 6078 may be performed (refer to the descriptions of FIG. 3b).

Step 6076 (similar to step 35b1 and step 35b2): The AMF sends the check value or the ciphertext information to the AF.

Correspondingly, the AF receives the check value or the ciphertext information from the AMF.

Optionally, the AMF may further send the random number to the AF, for example, the random number corresponding to the first terminal that is obtained by the AMF in step 6071 or the random number from the first terminal in step 6074.

In a specific example, the AMF communicates with the AF via the NEF. The AMF may first send the random number and the check value (or the ciphertext information) to the NEF, and then the NEF sends the random number (optional) and the check value (or the ciphertext information) to the AF. In a possible implementation, the random number (optional) and the check value (or the ciphertext information) may be carried in a request (for example, authentication request (Authentication Request) or authentication request (Authorization Request)) message sent by the AMF to the NEF.

Step 6077: The AF checks the check value or the ciphertext information based on the random number.

For a specific process of step 6077, refer to step 36b1 and step 36b2. Details are not described again.

Step 6078: The AF sends, to the AMF, information indicating authentication success or check success.

Correspondingly, the AMF receives the information indicating authentication success or check success that is sent by the AF.

In a specific example, the AMF communicates with the AF via the NEF. The AF may first send, to the NEF, the information indicating authentication success or check success, and then the NEF sends, to the AF, the information indicating authentication success or check success.

In a possible implementation, the information indicating authentication success or check success may be carried in a response (for example, authentication response (Authentication Response) or authentication response (Authorization Response)) message sent by the NEF to the AMF.

In a current technology, a random number for a terminal device is usually generated and sent by an authenticator to the terminal device. In this manner, the authenticator is the AF, the AMF generates the random number for the first terminal, and sends the random number to the terminal device, and the AF does not need to send the random number for the first terminal to the AMF, so that signaling overheads can be reduced.

If the authentication mode corresponding to the first terminal is one-way authentication performed by the network corresponding to the core network device on the first terminal, step 6079 to step 6081 may be performed (refer to the descriptions of FIG. 3e). Step 6079 to step 6081 are described by using an example in which the UDM performs authentication. The core network device that performs authentication is not limited in this application, and may be a device having an authentication function, such as the AUSF, the NSSAAF, the NEF, or an AAA server.

Step 6079 (same as step 36e): The AMF sends the check value or the ciphertext information (optionally, further including the random number) to the UDM.

Correspondingly, the UDM receives the check value or the ciphertext information (optionally, further including the random number) from the AMF.

In a possible implementation, the check value or the ciphertext information (optionally, further including the random number) may be carried in a request (for example, authentication request (Authentication Request) or authentication request (Authorization Request)) message sent by the AMF to the UDM.

Step 6080 (same as step 37e): The UDM checks the check value or the ciphertext information based on the random number.

For a specific process of step 6080, refer to step 37e. Details are not described again.

Step 6081: The UDM sends, to the AMF, information indicating authentication success or check success.

Correspondingly, the AMF receives the information indicating authentication success or check success that is sent by the UDM.

In a possible implementation, the information indicating check success/authentication success may be carried in a response (for example, authentication response (Authentication Response) or authentication response (Authorization Response)) message sent by the UDM to the AMF. In a current technology, a random number for a terminal device is usually generated and sent by an authenticator to the terminal device. In this manner, the authenticator is the UDM, the AMF generates the random number for the first terminal, and sends the random number to the terminal device, and the UDM does not need to send the random number for the first terminal to the AMF, so that signaling overheads can be reduced.

Step 608: The AMF sends information about the first terminal to the AF.

A sequence of step 608, step 606, and step 607 is not limited.

Step 609: The AMF sends a registration accept message to the first terminal.

Correspondingly, the first terminal receives the registration accept message from the AMF.

A sequence of step 609 and step 608 is not limited.

It may be understood that the registration accept message means access success of the first terminal. The registration accept message may alternatively be indication information indicating access success of the first terminal, an access success message, a response message for successful network access, or a response message for successful registration with the network. A name of the message is not limited in this application.

The foregoing describes the method in embodiments of this application, and the following describes an apparatus in embodiments of this application. The method and the apparatus are based on a same technical idea. The method and the apparatus have similar principles for resolving problems. Therefore, for implementations of the apparatus and the method, refer to each other. Repeated parts are not described again.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It should be noted that in embodiments of this application, module division is an example, and is merely a logical function division. During specific implementation, another division manner may be used.

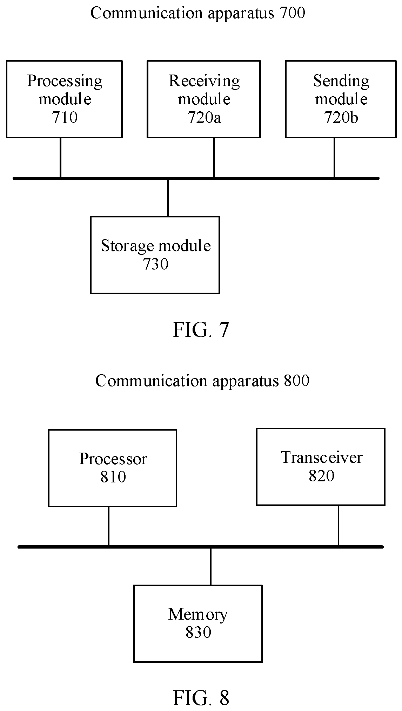

Based on the same technical concept as the foregoing method, FIG. 7 is a diagram of a structure of a communication apparatus 700. The communication apparatus 700 may include one or more of the following: a processing module 710, a receiving module 720a, a sending module 720b, and a storage module 730. The processing module 710 may be separately connected to the storage module 730, the receiving module 720a, and the sending module 720b. The storage module 730 may also be connected to the receiving module 720a and the sending module 720b.

In an example, the receiving module 720a and the sending module 720b may alternatively be integrated together as a transceiver module.

In an example, the communication apparatus 700 may be a core network device, or may be a chip or a functional unit used in a core network device. The communication apparatus 700 has any function of the core network device in the foregoing method. For example, the communication apparatus 700 can perform the steps performed by the core network device in the methods in FIG. 2, FIG. 3a, FIG. 3b, FIG. 3c, FIG. 3d, FIG. 3e, FIG. 3f, FIG. 4, FIG. 5, and FIG. 6.

The receiving module 720a may perform a receiving action performed by the core network device in the foregoing method embodiments.

The sending module 720b may perform a sending action performed by the core network device in the foregoing method embodiments.

The processing module 710 may perform another action other than the sending action and the receiving action in actions performed by the core network device in the foregoing method embodiments.

In an example, the receiving module 720a is configured to receive first information from a requester, where the first information indicates a first terminal. The processing module 710 is configured to: obtain an authentication mode corresponding to the first terminal, and perform a procedure corresponding to the authentication mode.

In an example, the processing module 710 is further configured to obtain an identifier of the first terminal. The sending module 720b is configured to send the identifier of the first terminal to the requester.

In an example, the authentication mode includes any one of the following: a two-way authentication mode and a one-way authentication mode.

In an example, the two-way authentication mode includes any one of the following: two-way authentication between the first terminal and the requester, and two-way authentication between the first terminal and a first network corresponding to the core network device.

In an example, the one-way authentication mode includes any one of the following: one-way authentication performed by the requester on the first terminal, one-way authentication performed by a first network corresponding to the core network device on the first terminal, one-way authentication performed by the first terminal on the requester, and one-way authentication performed by the first terminal on the first network corresponding to the core network device.

In an example, when the authentication mode is one-way authentication performed by the first terminal on the requester, the receiving module 720a is further configured to receive a random number from the first terminal. The sending module 720b is further configured to send the random number to the requester. The receiving module 720a is further configured to receive a check value or ciphertext information from the requester. The sending module 720b is further configured to send the check value or the ciphertext information to the first terminal.

In an example, when the authentication mode is one-way authentication performed by the requester on the first terminal, the receiving module 720a is further configured to receive a random number from the requester. The sending module 720b is further configured to send the random number to the first terminal. The receiving module 720a is further configured to receive a check value or ciphertext information from the first terminal. The sending module 720b is further configured to send the check value or the ciphertext information to the requester.

In an example, when the authentication mode is one-way authentication performed by the requester on the first terminal, the processing module 710 is further configured to obtain a random number. The sending module 720b is further configured to send the random number to the first terminal. The receiving module 720a is further configured to receive a check value or ciphertext information from the first terminal. The sending module 720b is further configured to: send the random number to the requester, and send the check value or the ciphertext information to the requester.

In an example, when the authentication mode is two-way authentication between the first terminal and the requester, the receiving module 720a is further configured to receive a random number from the first terminal. The sending module 720b sends the random number to the requester. The receiving module 720a is further configured to receive a first check value or first ciphertext information from the requester. The sending module 720b is further configured to send the first check value or the first ciphertext information to the first terminal. The receiving module 720a is further configured to receive a second check value or second ciphertext information from the first terminal. The sending module 720b is further configured to send the second check value or the second ciphertext information to the requester.

In an example, when the authentication mode is one-way authentication performed by the first terminal on the first network corresponding to the core network device, the receiving module 720a is further configured to receive a first random number from the first terminal. The processing module 710 is further configured to: obtain a second random number, and obtain a check value or ciphertext information based on the first random and the second random number. The sending module 720b is further configured to send the check value or the ciphertext information to the first terminal.

In an example, when the authentication mode is one-way authentication performed by the first terminal on the first network corresponding to the core network device, the receiving module 720a is further configured to receive a first random number from the first terminal. The processing module 710 is further configured to obtain a check value or ciphertext information based on the first random. The sending module 720b is further configured to send the check value or the ciphertext information to the first terminal.

In an example, when the authentication mode is one-way authentication performed by the first network corresponding to the core network device on the first terminal, the processing module 710 is further configured to obtain a random number. The sending module 720b is further configured to send the random number to the first terminal. The receiving module 720a is further configured to receive a check value or ciphertext information from the first terminal. The processing module 710 is further configured to check the check value or the ciphertext information based on the random number.

In an example, when the authentication mode is one-way authentication performed by the first network corresponding to the core network device on the first terminal, the processing module 710 is further configured to obtain a random number. The sending module 720b is further configured to send the random number to the first terminal. The receiving module 720a is further configured to receive a check value or ciphertext information from the first terminal. The sending module 720b is further configured to: send the random number to another core network device, and send the check value or the ciphertext information to the another core network device, so that the another core network device checks the check value or the ciphertext information based on the random number.

In an example, when the authentication mode is two-way authentication between the first terminal and the first network corresponding to the core network device, the receiving module 720a is further configured to receive a first random number from the first terminal. The processing module 710 is further configured to: obtain a second random number, and obtain a first check value or first ciphertext information based on the first random number and the second random number. The sending module 720b is further configured to send the first check value or the first ciphertext information to the first terminal. The receiving module 720a is further configured to receive a second check value or second ciphertext information from the first terminal. The processing module 710 is further configured to check the second check value or the second ciphertext information based on the second random number.

In an example, when the authentication mode is two-way authentication between the first terminal and the first network corresponding to the core network device, the receiving module 720a is further configured to receive a first random number from the first terminal. The processing module 710 is further configured to obtain a first check value or first ciphertext information based on the first random number. The sending module 720b is further configured to: send the first check value or the first ciphertext information to the first terminal, and send a second random number to the first terminal. The receiving module 720a is further configured to receive a second check value or second ciphertext information from the first terminal. The processing module 710 is further configured to check the second check value or the second ciphertext information based on the second random number.

In an example, the first information further indicates the authentication mode corresponding to the first terminal. The processing module 710 is specifically configured to obtain, based on the first information, the authentication mode corresponding to the first terminal.

In an example, the processing module 710 is specifically configured to: obtain first context information, first policy information, a first service configuration, or first subscription data of the first terminal, where the first context information, the first policy information, the first service configuration, or the first subscription data includes the authentication mode for the first terminal; and obtain, based on the first context information, the first policy information, the first service configuration, or the first subscription data, the authentication mode corresponding to the first terminal.

In an example, the processing module 710 is specifically configured to: obtain second context information, second policy information, a second service configuration, or second subscription data of the requester, where the second context information, the second policy information, the second service configuration, or the second subscription data includes an authentication mode corresponding to each of one or more terminals managed by the requester, and the one or more terminals managed by the requester include the first terminal; and obtain, based on the second context information, the second policy information, the second service configuration, or the second subscription data, the authentication mode corresponding to the first terminal.

In an example, the sending module 720b is further configured to send information about the authentication mode to the first terminal.

In an example, the receiving module 720a is configured to receive first information from a requester, where the first information indicates a first terminal. The processing module 710 is configured to: obtain an authentication mode corresponding to the first terminal, where the authentication mode corresponding to the first terminal is no authentication performed; determine that a location of the first terminal falls within a preset location range; and allow the requester or a first network corresponding to the core network device to skip an authentication procedure for the first terminal.

In an example, the processing module 710 is further configured to: determine that the location of the first terminal is outside the preset location range; and perform a procedure corresponding to a configured authentication mode, where the configured authentication mode is used to authenticate a terminal that accesses a network in which the core network device is located.

In an example, the location of the first terminal includes one or more of the following: a geographical location of the first terminal, and a geographical location of a second terminal that performs random access on the first terminal. The preset location range is a preset geographical location range.

In an example, the location of the first terminal is represented by a first identifier, and the preset location range is a preset identifier range. The first identifier includes one or more of the following: an identifier of an access network device accessed by the first terminal, an identifier of a cell in which the first terminal is located, an identifier of a tracking area in which the first terminal is located, an identifier of a network accessed by the first terminal, an identifier of a slice accessed by the first terminal, an identifier of a closed access group accessed by the first terminal, an identifier of an access network device accessed by a second terminal, an identifier of a cell in which the second terminal is located, an identifier of a tracking area in which the second terminal is located, an identifier of a network accessed by the second terminal, an identifier of a slice accessed by the second terminal, and an identifier of a closed access group accessed by the second terminal. The second terminal is a terminal that performs random access on the first terminal.

In an example, the sending module 720b is further configured to send, to the first terminal, indication information indicating access success access of the first terminal.

In an example, the storage module 730 may store computer-executable instructions for the method performed by the core network device, to enable the processing module 710, the receiving module 720a, and the sending module 720b to perform the method performed by the core network device in the foregoing examples.

For example, the storage module may include one or more memories. The memory may be a component, configured to store a program or data, in one or more devices and circuits. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

As a possible product form, the apparatus may be implemented by using a general bus architecture.

FIG. 8 is a schematic block diagram of a communication apparatus 800.

The communication apparatus 800 may include one or more of the following: a processor 810, a transceiver 820, and a memory 830. The transceiver 820 may be configured to: receive a program or instructions, and transmit the program or instructions to the processor 810. Alternatively, the transceiver 820 may be configured to perform communication interaction between the communication apparatus 800 and another communication device, for example, exchange control signaling and/or service data. The transceiver 820 may be a code and/or data read/write transceiver. Alternatively, the transceiver 820 may be a signal transmission transceiver between the processor and a transceiver machine. The processor 810 and the memory 830 are electrically coupled.

In an example, the communication apparatus 800 may be a core network device, or may be a chip used in a core network device. It should be understood that the apparatus has any function of the core network device in the foregoing method. For example, the communication apparatus 800 can perform the steps performed by the core network device in the methods in FIG. 2, FIG. 3a, FIG. 3b, FIG. 3c, FIG. 3d, FIG. 3e, FIG. 3f, FIG. 4, FIG. 5, and FIG. 6. For example, the memory 830 is configured to store a computer program. The processor 810 may be configured to invoke the computer program or instructions stored in the memory 830, to perform the method performed by the core network device in the foregoing example, or perform, via the transceiver 820, the method performed by the core network device in the foregoing example.

The processing module 710 in FIG. 7 may be implemented by the processor 810.

The receiving module 720a and the sending module 720b in FIG. 7 may be implemented by the transceiver 820. Alternatively, the transceiver 820 includes a receiver and a transmitter. The receiver performs functions of the receiving module, and the transmitter performs functions of the sending module.

The storage module 730 in FIG. 7 may be implemented by the memory 830.

As a possible product form, the apparatus may be implemented by a general-purpose processor (the general-purpose processor may also be referred to as a chip or a chip system).

In a possible implementation, the general-purpose processor that implements the apparatus used in the core network device includes a processing circuit (the processing circuit may also be referred to as a processor); and optionally, further includes an input/output interface that is connected to and communicates with the processing circuit, and a storage medium (the storage medium may also be referred to as a memory). The storage medium is configured to store instructions executed by the processing circuit, to perform the method performed by the core network device in the foregoing example.

The processing module 710 in FIG. 7 may be implemented by the processing circuit.

The receiving module 720a and the sending module 720b in FIG. 7 may be implemented by the input/output interface. Alternatively, the input/output interface includes an input interface and an output interface. The input interface performs functions of the receiving module, and the output interface performs functions of the sending module.

The storage module 730 in FIG. 7 may be implemented by the storage medium.

As a possible product form, the apparatus in embodiments of this application may alternatively be implemented by using the following: one or more FPGAs (field programmable gate arrays), a PLD (programmable logic device), a controller, a state machine, a gate logic, a discrete hardware component, any other appropriate circuit, or any combination of circuits that can perform various functions described in this application.

An embodiment of this application further provides a computer-readable storage medium that stores a computer program. When the computer program is executed by a computer, the computer may be enabled to perform the foregoing communication method. In other words, the computer program includes instructions used to implement the foregoing communication method.

An embodiment of this application further provides a computer program product, including computer program code. When the computer program code is run on a computer, the computer is enabled to perform the foregoing communication method.

An embodiment of this application further provides a communication system. The communication system includes at least two of the following: a core network device that performs the foregoing communication method, a first terminal, another core network device, and a requester.

In addition, the processor mentioned in embodiments of this application may be a central processing unit (central processing unit, CPU) or a baseband processor, where the baseband processor may be integrated with or separated from a CPU; or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor. Alternatively, the processor may be any conventional processor or the like.

The memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not restrictive description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application is intended to include but is not limited to these memories and any other appropriate types of memories.

The transceiver mentioned in embodiments of this application may include a separate transmitter and/or a separate receiver, or may integrate a transmitter and a receiver. The transceiver may operate based on an indication of a corresponding processor. Optionally, the transmitter may correspond to a transmitter machine in a physical device, and the receiver may correspond to a receiver machine in the physical device.

A person of ordinary skill in the art may be aware that the method steps and units described in embodiments disclosed in this specification may be implemented by electronic hardware, computer software, or a combination thereof. To clearly describe interchangeability between hardware and software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, the unit division is merely a logical function division. During actual implementation, another division manner may be used. For example, a plurality of units or components may be combined or integrated into another system, or some features may be ignored or may not be performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing to the conventional technology, or all or some of the technical solutions may be represented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

Although preferred embodiments of this application are described, a person skilled in the art can make changes and modifications to these embodiments after they learn of a basic inventive concept. Therefore, the following claims are intended to be construed as to cover the preferred embodiments and all changes and modifications falling within the scope of this application.

Clearly, a person skilled in the art can make various modifications and variations to embodiments of this application without departing from the spirit and scope of embodiments of this application. In this way, this application is intended to cover these modifications and variations to embodiments of this application provided that they fall within the scope of protection defined by the following claims and their equivalent technologies of this application.

## Claims

1. A communication method, applied to a core network device, and comprising:
receiving first information from a requester, wherein the first information indicates a first terminal;
obtaining an authentication mode corresponding to the first terminal; and
performing a procedure corresponding to the authentication mode.

2. The method according to claim 1, wherein after the receiving first information from a requester, the method further comprises:
obtaining an identifier of the first terminal, and sending the identifier of the first terminal to the requester.

3. The method according to claim 1 or 2, wherein the authentication mode comprises any one of the following:
a two-way authentication mode and a one-way authentication mode.

4. The method according to claim 3, wherein the two-way authentication mode comprises any one of the following:
two-way authentication between the first terminal and the requester, and two-way authentication between the first terminal and a first network corresponding to the core network device; or
the one-way authentication mode comprises any one of the following:
one-way authentication performed by the requester on the first terminal, one-way authentication performed by a first network corresponding to the core network device on the first terminal, one-way authentication performed by the first terminal on the requester, and one-way authentication performed by the first terminal on the first network corresponding to the core network device.

5. The method according to claim 4, wherein the performing a procedure corresponding to the authentication mode comprises:
when the authentication mode is one-way authentication performed by the first terminal on the requester, receiving a random number from the first terminal, and sending the random number to the requester; and receiving a check value or ciphertext information from the requester, and sending the check value or the ciphertext information to the first terminal; or
when the authentication mode is one-way authentication performed by the requester on the first terminal, receiving a random number from the requester, and sending the random number to the first terminal; and receiving a check value or ciphertext information from the first terminal, and sending the check value or the ciphertext information to the requester; or
when the authentication mode is one-way authentication performed by the requester on the first terminal, obtaining a random number, and sending the random number to the first terminal; and receiving a check value or ciphertext information from the first terminal, sending the random number to the requester, and sending the check value or the ciphertext information to the requester; or
when the authentication mode is two-way authentication between the first terminal and the requester, receiving a random number from the first terminal, and sending the random number to the requester; receiving a first check value or first ciphertext information from the requester, and sending the first check value or the first ciphertext information to the first terminal; and receiving a second check value or second ciphertext information from the first terminal, and sending the second check value or the second ciphertext information to the requester; or
when the authentication mode is one-way authentication performed by the first terminal on the first network corresponding to the core network device, receiving a first random number from the first terminal; obtaining a second random number; and obtaining a check value or ciphertext information based on the first random and the second random number, and sending the check value or the ciphertext information to the first terminal; or
when the authentication mode is one-way authentication performed by the first terminal on the first network corresponding to the core network device, receiving a first random number from the first terminal; and obtaining a check value or ciphertext information based on the first random, and sending the check value or the ciphertext information to the first terminal; or
when the authentication mode is one-way authentication performed by the first network corresponding to the core network device on the first terminal, obtaining a random number, and sending the random number to the first terminal; and receiving a check value or ciphertext information from the first terminal, and checking the check value or the ciphertext information based on the random number; or
when the authentication mode is one-way authentication performed by the first network corresponding to the core network device on the first terminal, obtaining a random number, and sending the random number to the first terminal; and receiving a check value or ciphertext information from the first terminal, sending the random number to another core network device, and sending the check value or the ciphertext information to the another core network device, so that the another core network device checks the check value or the ciphertext information based on the random number; or
when the authentication mode is two-way authentication between the first terminal and the first network corresponding to the core network device, receiving a first random number from the first terminal; obtaining a second random number; obtaining a first check value or first ciphertext information based on the first random number and the second random number, and sending the first check value or the first ciphertext information to the first terminal; and receiving a second check value or second ciphertext information from the first terminal, and checking the second check value or the second ciphertext information based on the second random number; or
when the authentication mode is two-way authentication between the first terminal and the first network corresponding to the core network device, receiving a first random number from the first terminal; obtaining a first check value or first ciphertext information based on the first random number, sending the first check value or the first ciphertext information to the first terminal, and sending a second random number to the first terminal; and receiving a second check value or second ciphertext information from the first terminal, and checking the second check value or the second ciphertext information based on the second random number.

6. The method according to any one of claims 1 to 5, wherein the first information further indicates the authentication mode corresponding to the first terminal; and the obtaining an authentication mode corresponding to the first terminal comprises:
obtaining, based on the first information, the authentication mode corresponding to the first terminal.

7. The method according to any one of claims 1 to 5, wherein the obtaining an authentication mode corresponding to the first terminal comprises:
obtaining first context information, first policy information, a first service configuration, or first subscription data of the first terminal, wherein the first context information, the first policy information, the first service configuration, or the first subscription data comprises the authentication mode for the first terminal; and
obtaining, based on the first context information, the first policy information, the first service configuration, or the first subscription data, the authentication mode corresponding to the first terminal.

8. The method according to any one of claims 1 to 5, wherein the obtaining an authentication mode corresponding to the first terminal comprises:
obtaining second context information, second policy information, a second service configuration, or second subscription data of the requester, wherein the second context information, the second policy information, the second service configuration, or the second subscription data comprises an authentication mode corresponding to each of one or more terminals managed by the requester, and the one or more terminals managed by the requester comprise the first terminal; and
obtaining, based on the second context information, the second policy information, the second service configuration, or the second subscription data, the authentication mode corresponding to the first terminal.

9. The method according to any one of claims 1 to 8, wherein after the obtaining an authentication mode corresponding to the first terminal, the method further comprises:
sending information about the authentication mode to the first terminal.

10. A communication method, applied to a core network device, and comprising:
receiving first information from a requester, wherein the first information indicates a first terminal;
obtaining an authentication mode corresponding to the first terminal, wherein the authentication mode corresponding to the first terminal is no authentication performed;
determining that a location of the first terminal falls within a preset location range; and
allowing the requester or a first network corresponding to the core network device to skip an authentication procedure for the first terminal.

11. The method according to claim 10, wherein after the receiving first information from a requester, the method further comprises:
obtaining an identifier of the first terminal, and sending the identifier of the first terminal to the requester.

12. The method according to claim 10 or 11, further comprising:
determining that the location of the first terminal is outside the preset location range; and
performing a procedure corresponding to a configured authentication mode, wherein the configured authentication mode is used to authenticate a terminal that accesses a network in which the core network device is located.

13. The method according to any one of claims 10 to 12, wherein the location of the first terminal comprises one or more of the following:
a geographical location of the first terminal, and a geographical location of a second terminal that performs random access on the first terminal; and
the preset location range is a preset geographical location range.

14. The method according to any one of claims 10 to 12, wherein the location of the first terminal is represented by a first identifier, and the preset location range is a preset identifier range, wherein
the first identifier comprises one or more of the following:
an identifier of an access network device accessed by the first terminal, an identifier of a cell in which the first terminal is located, an identifier of a tracking area in which the first terminal is located, an identifier of a network accessed by the first terminal, an identifier of a slice accessed by the first terminal, an identifier of a closed access group accessed by the first terminal, an identifier of an access network device accessed by a second terminal, an identifier of a cell in which the second terminal is located, an identifier of a tracking area in which the second terminal is located, an identifier of a network accessed by the second terminal, an identifier of a slice accessed by the second terminal, and an identifier of a closed access group accessed by the second terminal, wherein the second terminal is a terminal that performs random access on the first terminal.

15. The method according to any one of claims 11 to 14, wherein before the sending the identifier of the first terminal to the requester, the method further comprises:
sending, to the first terminal, indication information indicating access success of the first terminal.

16. A communication apparatus, comprising functional modules for implementing the method according to any one of claims 1 to 15.

17. A communication apparatus, comprising a processor, wherein the processor is coupled to a memory;
the memory is configured to store computer programs or instructions; and
the processor is configured to: execute some or all of the computer programs or instructions in the memory, and when the some or all of the computer programs or instructions are executed, implement the method according to any one of claims 1 to 15.

18. A communication apparatus, comprising a processor and a memory, wherein
the memory is configured to store computer programs or instructions; and
the processor is configured to: execute some or all of the computer programs or instructions in the memory, and when the some or all of the computer programs or instructions are executed, implement the method according to any one of claims 1 to 15.

19. A chip system, wherein the chip system comprises a processing circuit, and the processing circuit is coupled to a storage medium; and
the processing circuit is configured to: execute some or all of computer programs or instructions in the storage medium, and when the some or all of the computer programs or instructions are executed, implement the method according to any one of claims 1 to 15.

20. A computer-readable storage medium, configured to store a computer program, wherein the computer program comprises instructions for implementing the method according to any one of claims 1 to 15.

21. A computer program product, wherein the computer program product comprises computer program code, and when the computer program code is run on a computer, the computer is enabled to perform the method according to any one of claims 1 to 15.
